# EUROPEAN PATENT SPECIFICATION

(11) **EP 3 118 607 B1**
(45) Date of publication and mention of the grant of the patent: **03.10.2018**
(21) Application number: 15761642.6
(22) Date of filing: 16.03.2015
(51) Int. Cl.: G01N 3/08, G01N 19/04, G01M 3/08, G01N 3/00

(54) **TESTING DEVICE FOR FIXING-LOAD VERIFICATION**
PRÜFVORRICHTUNG ZUR ÜBERPRÜFUNG EINER BEFESTIGUNGSLAST
DISPOSITIF D'ESSAI DESTINÉ À LA VÉRIFICATION DE CHARGE DE FIXATION

(30) Priority: 14.03.2014 WO PCT/JP2014/056814
(43) Date of publication of application: 18.01.2017
(73) Proprietor: TRUST CO., LTD., Ibaraki-shi, Osaka 567-0029 (JP)
(72) Inventor: OBATA, Koichiro, Ibaraki-shi, Osaka 567-0029 (JP); TANIGUCHI, Hiroshi, Ibaraki-shi, Osaka 567-0029 (JP); UESUGI, Yoshiharu, Ibaraki-shi, Osaka 567-0029 (JP); KAWABE, Hiromitsu, Ibaraki-shi, Osaka 567-0029 (JP)
(74) Representative: Blodig, Wolfgang
(86) International application number: PCT/JP2015/057780
(87) International publication number: WO 2015/137519

(56) References cited:
- JP-A- H10 267 922
- JP-A- 2001 050 877
- JP-A- 2006 275 898
- JP-A- 2006 275 898
- US-A- 4 662 227
- US-A- 4 662 227
- US-B1- 6 393 905
- US-B1- 6 393 905

## Description

### TECHNICAL FIELD

The present invention relates to a verification testing device for readily verifying a fixing load of a rod-like steel member, such as a bolt or reinforcing bar, partially embedded in a fixing face, in a pulling direction from the fixing face.

### BACKGROUND ART

A fixing-load inspection apparatus for inspecting the attachment strength of an anchor bolt or anchor nut embedded in a concrete base plane, or a stud welded to the face of a base material, using a commercially available hand-held (portable) torque wrench or a load detector is disclosed (see Patent Document 1).

A contact portion of a torque wrench body is fitted to a wrench fitting section of an inspection jig body, and the torque wrench body rotates about a support point. According to the disclosure, the number of components of the inspection apparatus is small, the fixing load of the fixture can be inspected irrespective of presence/absence of a screw and further, a commercial available torque wrench is used as measurement equipment. Such inexpensive measurement equipment can be used for other applications, and can be rapidly attached even in small and narrow space to easily inspect the fixing load. The inspection jig can be easily set to even a fixture attached to a lower face of a ceiling, and only the weight of the light-weighted inspection jig acts on the fixture.

### PRIOR ART DOCUMENT

### PATENT DOCUMENT

Patent Document 1: Japanese Laid-open Publication No. 2006-275898
US 4 662 227 A discloses a testing apparatus for measuring the pull-out resistance of fasteners.
US 6 393 905 B1 discloses a test device for measuring the adhesion strength of a coating applied to a substrate.

### SUMMARY OF THE INVENTION

### PROBLEMS TO BE SOLVED BY THE INVENTION

However, the above-mentioned conventional fixing-load inspection device includes a shaft insertion hole in an outer face of the inspection jig body on the side of the support point. A fixture shaft to be inspected is inserted into the shaft insertion hole, thereby holding the contact portion in the inspection jig body. To insert the shaft into the shaft insertion hole in this manner, all of components including a nut and a fixing plate, which are attached to a fixing bolt as a fixture to be inspected, must be detached in advance. For this reason, the conventional fixing-load inspection device cannot be easily set to the shaft. Such complicated attachment procedure lowers the inspection efficiency.

Generally, a plurality of fixture shafts to be inspected support one large component. Thus, the fixing-load inspection is ideally performed on a 100 percent basis. However, the above-mentioned conventional fixing-load inspection device requires the bolt and the fixing plate to be detached in advance, making the 100 percent inspection difficult.

Especially, the fixture shafts in the ceiling, such as light-weighted hanging bolts on the ceiling and various support bolts of equipment in the ceiling, are often fixed in a narrow place. For this reason, it is extremely complicated to carry out work in limited work space near the fixing portion.

The present invention is devised in consideration of such situations, and provides a testing device for fixing-load verification capable of verifying the fixing force of the fixing bolt using a simple procedure even when work is being carried out in limited work space, and enabling 100 percent inspection with high inspection efficiency.

### SOLUTIONS TO THE PROBLEMS

The present invention relates to the subject matter of claims 1 to 5.

To solve the above-mentioned problems, the testing device for fixing-load verification of the present invention has following configuration.
(1) A testing device for fixing-load verification of the present invention is a testing device for fixing-load verification for verifying a fixing load of a fixing bolt (B) according to claim 1 having a front end embedded in a fixing face (F), and a head protruding from the fixing face, the testing device including:
   a signal-type rod-like torque wrench body (1) having a handle (11) at an upper end, and a detection mechanism for anti-torque in a bending direction in a rod-like torque detection unit at a lower end;
   a connector (2) that covers the rod-like torque detection unit at the lower end of the torque wrench body (1), and is coupled to a front end of the torque wrench body (1);
   a contact portion (21/25) that is axially supported to be rotatable about a pivot axis in the connector (2) within a predetermined angle range, protrudes outward from a lower portion of the connector (2), and makes contact with the fixing face (F) at its front end; and
   an engagement means (3) that fixedly protrudes from one side portion of the connector (2), and engages with the fixing bolt (B) protruding from the fixing face (F), wherein
   the engagement means (3) engages with the fixing bolt (B), and the contact portion (21/25) of the connector (2) makes contact with the fixing face (F) in an opposed manner into a set state,
   in the set state, while the contact state of the contact portion (21/25) with the fixing face (F) is kept, the torque wrench body (1) is repeatedly inclined such that inclination toward the other side and rising toward one side is alternated, to rotate the contact portion (21/25) that is in contact with the fixing face about the gear shaft of the wrench gear with respect to the connector (2), thereby cumulatively rotating the wrench gear built in the connector (2) only in one direction that is a gear fastening direction,
   when detecting a predetermined torque set value torque based on the cumulative rotation of the wrench gear, the detection mechanism built in the wrench body (1) causes the detection mechanism built in the torque wrench body (1) to output a detection sound or display detection of the cumulative rotation,
   the engagement means (3) includes a recessed part (30) that accommodates the fixing bolt (B) from side at a front end of a side face, and
   in the set state, the protruding portion of the fixing bolt (B) is fixedly accommodated in the recessed part (30) to engage the fixing bolt in the recessed part (30).

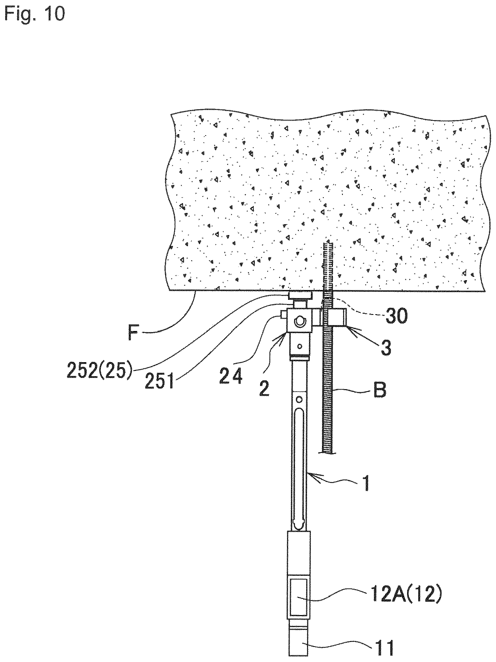

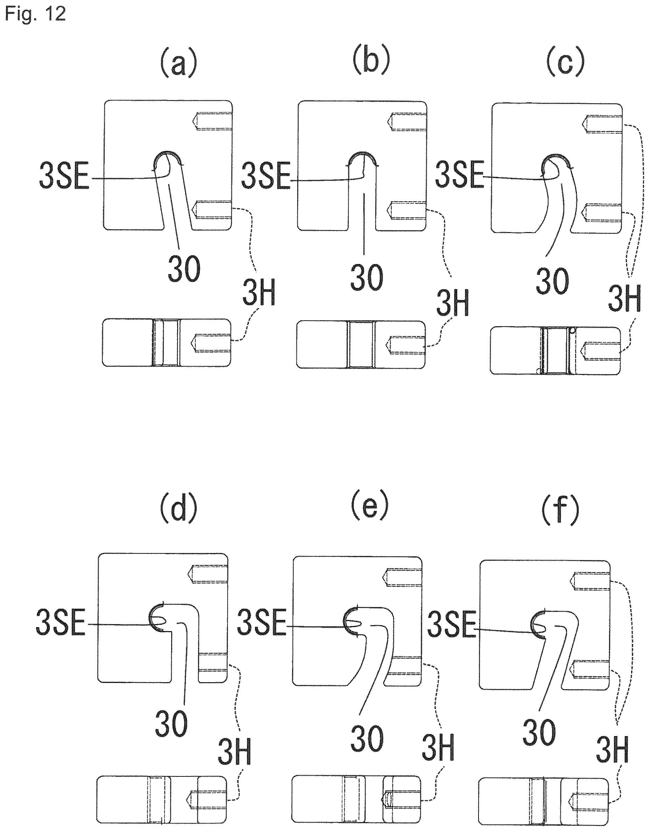

   With above-mentioned configuration, a set value and a detection value of a fastening torque of the signal-type torque wrench can be converted into a pickup moment value of the fixing bolt (B) by the engagement means (3) to readily detect the fixing force of the fixing bolt (B) to the fixing face (F). The detection can be made merely by engaging the engagement means (3) with the fixing bolt (B), and reciprocatively rotating the torque wrench body (1) within the predetermined angle while fixing the contact portion (21/25) to the fixing face (F). This eliminates complicated work such as installation of a pressure pipe. Especially, since the protruding portion of the fixing bolt (B) can be accommodated only by inserting the engagement means (3) from side through the opening of the recessed part (30), the fixing bolt can be readily engaged and disengaged, greatly improving workability.
   In the testing device for fixing-load verification of the present invention, the engagement means (3) is formed of an engagement plate fixedly extending from one side of the connector (2) in a predetermined extending direction,
   the recessed part (30) as a predetermined notched channel is formed by cutting the engagement plate from one end toward the inside of the plate in plan view,
   the notched channel at least partially includes a channel direction that is different from the extending direction in plan view, and
   a thread of the fixing bolt (B) can engage with a recess inner face (30E) formed at a deepest part of the recessed part (30).
   With above-mentioned configuration, the engagement means (3) is the engagement plate having the recessed part (30) formed by cutting and thus, can be inexpensively produced with simple structure. The fixing bolt (B) can be engaged and held by inserting the fixing bolt (B) from one end of the engagement plate toward the inside of the plate along the predetermined notched channel and then, engaging the fixing bolt (B) with the deepest part of the recessed part (30), achieving good operability. Here, the notched channel at least partially includes the channel direction that is different from the extending direction of the engagement plate. That is, at least a portion of the channel direction of the notched channel is different from the extending direction. For this reason, once the fixing bolt (B) engages with the deepest part of the recessed part (30), even when the torque wrench body (1) or the connector (2) wrongly moves in the extending direction, the engagement is hardly released. Therefore, the set state where the fixing bolt (B) engages with the fixing face can be reliably kept. The engagement of the fixing bolt (B) can be readily released by moving the engagement plate along the notched channel in the opposite direction to the inserting direction. This realizes the testing device for fixing-load verification that has good operability in setting and releasing of setting, and cannot be accidentally released in engagement.
   The above-mentioned configuration corresponds to below-mentioned Embodiments 4 to 9 (Fig. 10 to Fig. 12). Describing the channel direction of the notched channel in plan view in each of Embodiments 4 to 9 (Fig. 10 to Fig. 12), in Embodiment 4 illustrated in Fig. 12(a), the notched channel of the recessed part (30) is a linear notched channel inclined in plan view that crosses the illustrated leftward extending direction with an acute inclination angle less than 90 degrees in plan view. In Embodiment 5 illustrated in Fig. 12(b), the notched channel is a vertical linear notched channel that is orthogonal to the illustrated leftward extending direction with 90 degrees in plan view. In Embodiment 6 illustrated in Fig. 12(c), the notched channel is a curved notched channel that runs to the upper right with an angle exceeding 90 degrees to be gradually curved leftward, and crosses the illustrated leftward extending direction at the deepest part with an angle of 90 degrees or less than 90 degrees in plan view. In each of Embodiments 7, 8, and 9 illustrated in Figs. 12(d), 12(e), and 12(f), respectively, the notched channel is a vertical linear notched channel that is orthogonal to the illustrated leftward extending direction with an angle of 90 degrees or less than 90 degrees in plan view, and is curved leftward in the same direction as the extending direction in the middle of the channel, and then, overlaps with the extending direction at the deepest part.
(2) Preferably in any of the testing devices for fixing-load verification of the present invention, at least a portion of the recess inner face (30E) formed at the deepest part of the recessed part (30) may have an inner side face opposed to the extending direction of the engagement plate, and at least the deepest part of the notched channel of the recessed part (30) and the extending direction of the engagement plate may cross each other with an inclination angle less than 90 degrees, or overlap each other in plan view.
   With the above-mentioned configuration, since the inner side face of the recess inner face (30E) formed at the deepest part of the recessed part (30) is at least partially opposed to the extending direction of the engagement plate, when the torque wrench body (1) is inclined in the opposite direction to the extending direction (for example, leftward in Fig. 12) (rightward in Fig. 12), a force is applied such that the inner side face of the recess inner face (30E) and the fixing bolt (B) are in press-contact with each other in the opposed manner. Thus, the engagement with the fixing bolt (B) cannot be easily released, reliably maintaining the set stat at inclination. Since at least a portion of the notched channel is inclined and crosses the extending direction of the engagement plate in plan view, even when the torque wrench body (1) or the connector (2) wrongly moves in the direction that is different from the extending direction, such as the direction that is orthogonal to the extending direction in plan view, the engagement state can be kept.
   For example, below-mentioned Embodiments 4 and 6 (Figs. 12(a) and 12(c)), and Embodiments 7, 8, and 9 (Figs. 12(d), 12(e), and 12(f)) each correspond to the above configuration. Describing the recess inner face (30E) formed at the deepest part in each of Embodiment 4 and Embodiments 6 to 9 (Fig. 10 to Fig. 12), in Embodiments 4 and 6 illustrated in Fig. 12(a) and 12(c), the semicircular recess inner face (30E) crosses the illustrated leftward extending direction with an angle less than 90 degrees in plan view, and an illustrated left half or more of the recess inner face (30E) has an inner side face opposed to the extending direction. In each of Embodiments 7, 8, and 9 illustrated in Figs. 12(d), 12(e), and 12(f), respectively, the semicircular recess inner face (30E) is orthogonal to the illustrated leftward extending direction with 90 degrees in plan view, and the entire recess inner face (30E) has an inner side face opposed to the extending direction. In Embodiment 5 illustrated in Fig. 12 (b), the semicircular recess inner face (30E) is orthogonal to the illustrated leftward extending direction with 90 degrees in plan view, and an illustrated left half of the recess inner face (30E) has an inner side face opposed to the extending direction.
   Describing the notched channel in each of Embodiment 4 and Embodiments 6 to 9 (Fig. 10 to Fig. 12), in Embodiments 4 and 6 illustrated in Figs. 12(a) and 12(c), respectively, the deepest part of the notched channel of the recessed part (30) crosses the illustrated leftward extending direction with an acute inclination angle less than 90 degrees in plan view. In each of Embodiments 7, 8, and 9 illustrated in Figs. 12(d), 12(e), and 12(f), respectively, the deepest part of the notched channel of the recessed part (30) and the illustrated leftward extending direction overlap each other in the same leftward direction as the extending direction. In Embodiment 5 illustrated in Fig. 12(b), the deepest part of the notched channel is orthogonal to the illustrated leftward extending direction with 90 degrees in plan view.
(3) Preferably in any of the testing devices for fixing-load verification of the present invention, multistage engagement grooves (3SE) along the thread of the fixing bolt (B) may be formed on the recess inner face (30E) at the deepest part of the recessed part (30).
   That is, by forming the multistage engagement grooves (3SE) along the thread of the fixing bolt (B) at the deepest part of the recessed part (30), the fixing bolt (B) can be reliably engaged with the engagement grooves (3SE). The multistage means that a plurality of engagement grooves are formed in parallel over the thickness of the engagement means, thereby forming a plurality of engagement protrusions between the grooves. For example, in below-mentioned Embodiments 4 to 9, the deepest part of the recessed part (30) is formed of the arcuate recess inner face (30E) that can accommodate the fixing bolt (B) in plan view, and the engagement grooves (3SE) configured of multistage partial thread grooves that can engage with the thread of the fixing bolt (B) are formed in the recess inner face (30E) of the recess inner face (30E). Also in below-mentioned other embodiments (Embodiments 1 to 3), unistage or multistage engagement grooves (3SE) can be formed in the recessed part (30). When the coupler (4) is not used, the fixing bolt can directly engage with a hole in the deepest part of recessed part (30).
(4) Preferably in the testing device for fixing-load verification of the present invention described in the above (1), the engagement means (3) may be configured of two engagement claws (31) protruding from the side of the connector (2) in parallel, and a coupler (4) having a cylindrical portion (42) that can be screwed with the fixing bolt (B),
   the two engagement claws (31) may form the recessed part (30) that is a U-shaped groove between the engagement claws (31) protruding in parallel,
   the coupler (4) may have a collar (41) on an outer circumference of the cylindrical portion (42), and
   the coupler (4) fixedly screwed with the fixing bolt (B) may be accommodated at the deepest part of the recessed part (30) between the two engagement claws (3), and the collar (41) of the coupler (4) may make contact with upper faces or lower faces of the engagement claws (31) to engage the engagement claws (31) with the coupler (4).
   The coupler is accommodated at the deepest part at which the coupler reaches the recessed part (30) and becomes unmovable, keeping a center distance (23L) between the rotational shaft, that is, the gear shaft and a force application point of the fixing bolt (B) uniform at repeated inclination of the torque wrench body (1), to enable reliable conversion into a moment detection value, that is, a pickup torque value.
(5) Preferably in any of the above-mentioned testing device for fixing-load verification of the present invention, the contact portion (21/25) may have a detachable contact stage (5/252) that adjusts a distance from the mount face at its protruding front end, and the contact stage (5/252) may be attached to adjust a protruding height from the connector (2) to the fixing face (F).

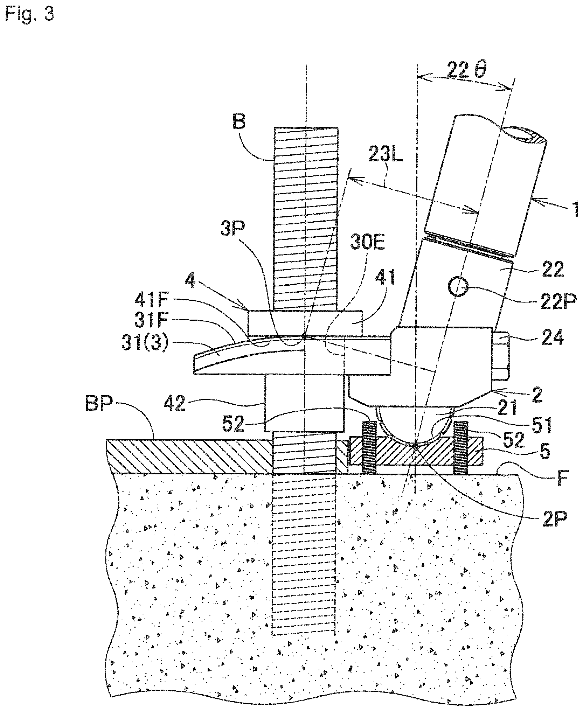

As illustrated in Fig. 3, in the fixing portion of the fixing bolt (B), attachments such as a fixed plate (BP) and a nut are generally attached on the fixing face or around the fixing bolt. In such case, unless the attachments are detached, an engageable portion of the fixing bolt (B) is separated from the fixing face (F). Even in such case, with the above-mentioned configuration, by providing the contact portion (21/25) with the contact stage (5/252) having a required height (thickness) according to the distance between the engageable portion of the fixing bolt (B) and the fixing face (F), the protruding height from the connector (2) to the fixing face (F) can be properly set. Thereby, even when the attachment is attached, the device of the present invention can be reliably set without detaching the attachment or adjusting the position of the attachment.

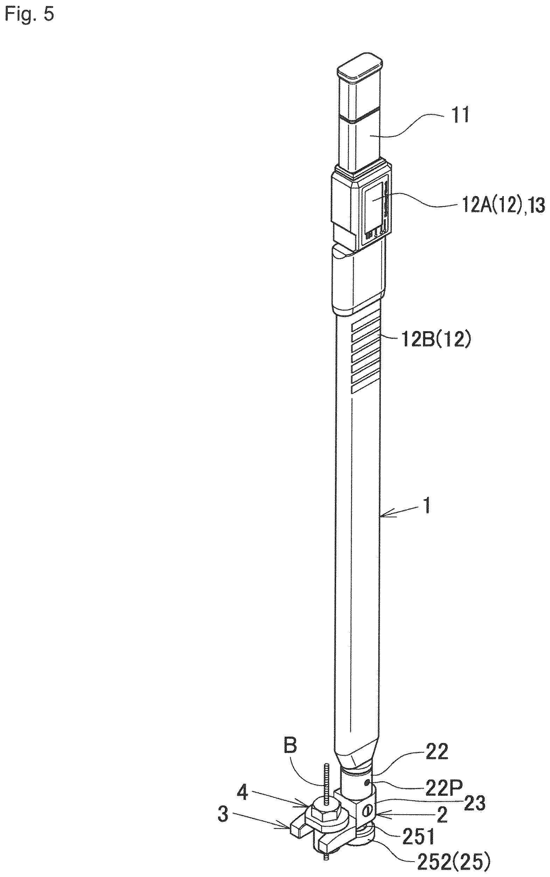

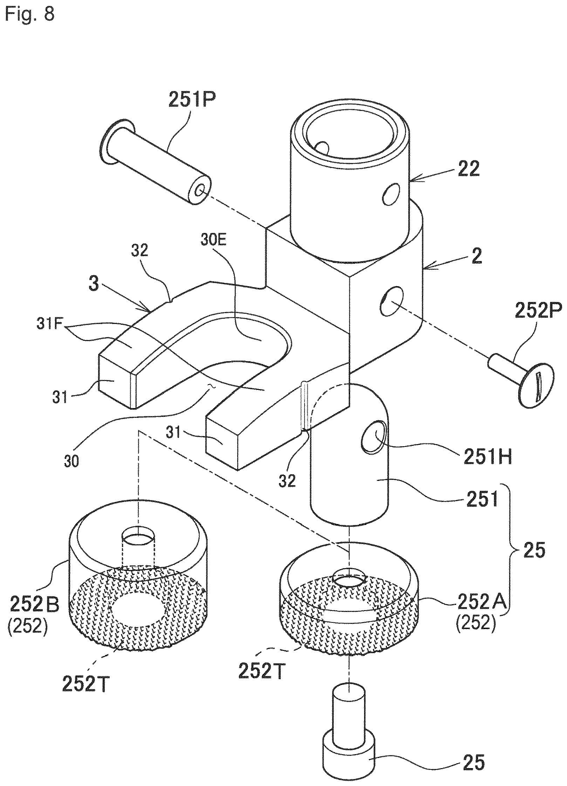

The contact stage of adjustable height (reference sign 5 in Fig. 5) is detachably provided in below-mentioned Embodiment 1, while any one of a plurality of contact stages having different heights (reference signs 252A and 252B in Fig. 8) is detachably provided in Embodiment 2. The protruding height from the connector (2) to the fixing face (F) can be adjusted by attaching any one of the contact stages (5/252) at the front end of the contact portion or replacing the contact stage with another contact stage having a different height (5/252). The plurality of contact stages (5/252) may be stacked to adjust the protruding height.

### EFFECTS OF THE INVENTION

A testing device for fixing-load verification of the present invention can verify the fixing force of a fixing bolt with a simple procedure, even when work is being carried out in limited work space, without labor such as previously detaching all of nuts and fixing plates attached to the body of the fixing bolt as a fixture to be inspected. As a result, inspection efficiency is enhanced by a simple procedure to enable 100 percent inspection.

### BRIEF DESCRIPTION OF THE DRAWINGS

Fig. 1 is a side view of a testing device for fixing-load verification in Embodiment 1 in a used state (set state).
Fig. 2 is a partial enlarged view of surroundings of a connector in Fig. 1.
Fig. 3 is a partial enlarged view of the surroundings of the connector of the testing device for fixing-load verification in Embodiment 1 using a contact stage in the set state.
Fig. 4 is a partial enlarged perspective view of components of the testing device for fixing-load verification in Embodiment 1.
Fig. 5 is a schematic perspective view of a testing device for fixing-load verification in Embodiment 2 in the used state (set state).
Fig. 6 is a partial enlarged perspective view of components around a connector of the testing device for fixing-load verification in Embodiment 2.
Fig. 7 is a partial enlarged side view of configuration around the connector of the testing device for fixing-load verification in Embodiment 2 (in set state).
Fig. 8 is a partial enlarged exploded perspective view of configuration around the connector of the testing device for fixing-load verification in Embodiment 2.
Fig. 9a is a top perspective view of a coupler of a testing device for fixing-load verification in Embodiment 3.
Fig. 9b is a bottom perspective view of the coupler of the testing device for fixing-load verification in Embodiment 3.
Fig. 9c is a sectional view of the coupler in Fig. 9a and Fig. 9b along β.
Fig. 10 is a side view of a testing device for fixing-load verification in Embodiment 4 of the present invention in the used state (set state).
Fig. 11 is a partial enlarged perspective view of configuration around a connector of the testing device for fixing-load verification in Embodiment 4.
Figs. 12 are plan views showing shapes of engagement plates in Embodiment 4(12(a)) and Embodiments 5 to 9 (12(b) to 12(f)), respectively.
Fig. 13 is a schematic perspective view of a testing device for fixing-load verification in Embodiment 10 in the set state.
Fig. 14 is a partial enlarged view of surroundings of a connector of the testing device for fixing-load verification in Embodiment 10.
Fig. 15 is a partial enlarged view illustrating inner configuration of surroundings of a connector of the testing device for fixing-load verification in Embodiment 10.
Fig. 16 is a partial enlarged perspective view of components around the connector of the testing device for fixing-load verification in Embodiment 10.

### EMBODIMENTS OF THE INVENTION

Configuration of a testing device for fixing-load verification of the present invention will be described below in detail with reference to figures. The testing device for fixing-load verification of the present invention is used to test a fixing load of a fixing bolt (B) having a front end fixedly embedded in a fixing face (F) of a floor face, a ceiling face, or a wall face, and a protruding head. Describing the basic configuration, in place of a torque fixing portion attached to a wrench gear at a front end of a rod-like torque wrench body (1) linearly extending along its axis, a contact portion (21/25), which is fixed to the wrench gear in a connector (2) as a coupling or supporting structure and protrudes outward from the lower portion of the connector (2), is axially attached so as to be rotatable about the gear shaft of the wrench gear via the connector (2). An engagement means (3) that engages with the fixing bolt (B) protrudes from one side of the connector (2) and is attached thereto. Alternatively, describing the basic configuration, in place of the torque fixing portion attached to an anti-torque detection portion of the front end of the rod-like torque wrench body (1) linearly extending along its axis, the contact portion (21/25), which is fixed to the wrench gear in the connector (2) as a coupling or supporting structure and protrudes outward from the lower part of the connector (2), is axially attached so as to be rotatable about the gear shaft of the wrench gear via the connector (2). The engagement means (3) that engages with the fixing bolt (B) protrudes from one side of the connector (2) and is attached thereto.

### (Basic configuration)

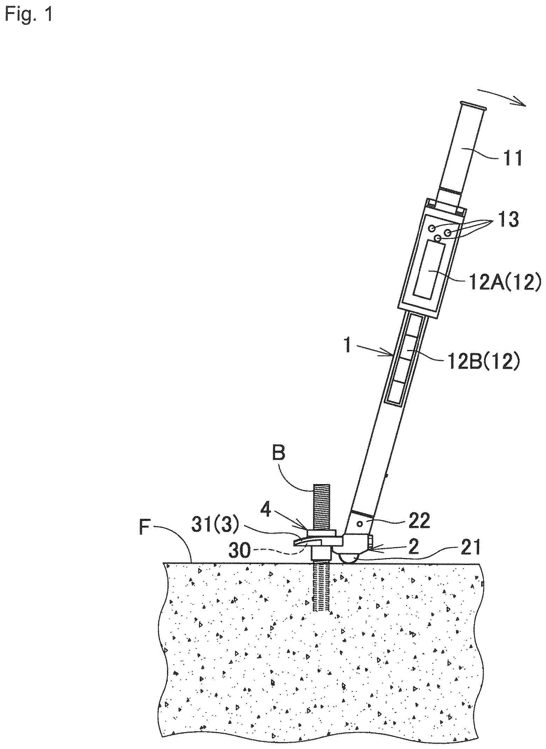

Specifically, as schematically illustrated in Fig. 1, Fig. 5, Fig. 10, and Fig. 13, the testing device for fixing-load verification of the present invention includes:
the signal-type torque wrench body (1) having a handle (11) at an upper end, and a detection mechanism for anti-torque in a bending direction in a rod-like torque detection unit at a lower end,
the connector (2) fixed to the rod-like torque detection unit at the lower end of the torque wrench body (1),
the contact portion (21/25) that protrudes outward from the lower end of the connector (2), and makes contact with a fixing face (F) at its front end; and
the engagement means (3) that fixedly protrudes from one side of the connector (2), and engages with the fixing bolt (B) protruding from the fixing face (F).

The torque wrench body (1) or the connector (2) includes a detection mechanism that detects that a detected anti-torque reaches a set value.

The contact portion (21/25) may have a curved sliding convex face that protrudes from the lower portion of the connector (2), and slidably makes contact with the fixing face or its parallel auxiliary face, or may be pivotably supported to be rotatable about pivot axis in the connector (2) within a predetermined angle range, and fixedly makes contact with the fixing face or its parallel auxiliary face with an appropriate static frictional force such that an angle with respect to the connector (2) is variable.

### (Basic usage)

According to a basic method of using the present invention,
the fixing bolt (B) engages with the engagement means (3), and the contact portion (21/25) of the connector (2) makes contact with the fixing face (F) in an opposed manner into a set state (Fig. 1, Fig. 2, Fig. 3, or Fig. 10),
in the set state, while the contact state of the contact portion (21/25) with the fixing face (F) is kept, the torque wrench body (1) is repeatedly inclined such that inclination toward the other side and rising toward one side is alternated. The repeated inclination is performed until the detection mechanism built in the torque wrench body (1) detects a predetermined torque set value.

In the set state, the front end of the contact portion (21/25) protruding from the connector 2 of the testing device for fixing-load verification of the present invention makes contact with the fixing face in the vicinity of an embedded portion of the fixing bolt (B) to be fixedly positioned, thereby engaging the engagement means attached to the connector with a bolt head. By inclining the torque wrench body in the set state, the engagement means (3) attached in place of the wrench fitting section applies a fixing load caused by a moment to the fixing bolt (B), to place a predetermined fixing load onto the torque wrench body 1 until the torque wrench body detects a predetermined torque value.

Especially in the case of using the cumulatively rotating wrench gear, repeated inclination causes the contact portion (21/25) that is in contact with the fixing face to rotate about the pivot axis in the connector (2), such that the wrench gear built in the connector (2) cumulatively rotates only in one direction that is a gear fastening direction. When the predetermined torque set value is detected based on cumulative rotation of the wrench gear, the detection mechanism built in the torque wrench body (1) outputs a detection sound, or lock the cumulative rotation and outputs a detection signal.

Especially in the case of using the rod-like torque wrench body (1) including the rod-like anti-torque detection unit (1P) at its lower end and the connector (2) that covers the rod-like anti-torque detection unit (1P), when the anti-torque in the bending direction, which is detected based on inclination toward the other side by the anti-torque detection unit (1P), becomes the predetermined torque set value, the detection mechanism built in the torque wrench body (1) outputs a detection sound, or flash a light on a display unit to output a detection signal.

The detection mechanism detects the predetermined torque set value, and a verification test of fixing force is performed according to the detection state of the detection mechanism built in the torque wrench body (1). Specifically, in the case where the detection mechanism operates to output the detection sound or a detection light, or locks the cumulative rotation before repeated inclination is completed predetermined number of times or less (one to plural times) (for example, 25 times), it is verified that the fixing force is the predetermined torque set value or more, that is, it is determined that the fixing force is a sufficient prescribed amount or more, to finish the verification test. On the contrary, in the case where the detection mechanism does not operate, and does not output the detection sound or lock the cumulative rotation even when the repeated inclination is repeated (for example, 25 times), it is verified that the fixing force is less than the predetermined torque set value, that is, it is determined that the fixing force does not reach the prescribed amount, to finish the verification test.

According to the present invention, the engagement means (3) has the recessed part (30) that accommodates the fixing bolt (B) from the side at the front end of the side face, and in the set state, the protruding portion of the fixing bolt (B) is fixedly accommodated at a predetermined position in the recessed part (30) to engage the fixing bolt in the recessed part (30). As in below-mentioned Embodiment 4 to 9, the recessed part (30) is oriented to cross the attachment direction of the engagement means (3), that is, the extending direction in plan view.

Since the fixing bolt (B) is engaged at the predetermined position, the center distance 23L between the gear shaft of the wrench gear and the force application point becomes uniform, and the detection value of the fastening torque of the torque wrench can be converted into a moment of reciprocating inclination, that is, a pickup torque with relatively high accuracy. The simple operation of accommodating and engaging the fixing bolt (B) in the recessed part (30) can set the set state, and the simple operation of pulling out the accommodated and engaged fixing bolt (B) from the inside of the recessed part (30) can release the set state. The fixing bolt can be remotely accommodated and engaged in the recessed part (30) by operating the handle (11) of the torque wrench, improving working efficiency. Most of complicated works, such as screwing for engagement and previous detachment of attachments, become unnecessary, facilitating setting and release of setting relatively readily. Further, the simple operation of reciprocatingly inclining the torque wrench body (1) from the set state, that is, the same type of operation as the operation of fastening the screw using the torque wrench can readily verify the fixing force, achieving good workability. Further, the signal-type torque wrench mechanism can be configured of a general-purpose torque wrench relatively inexpensively.

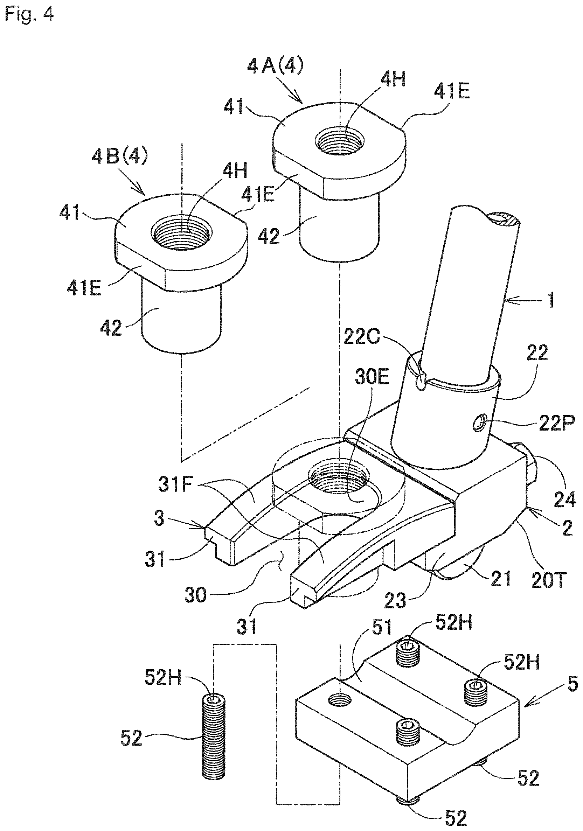

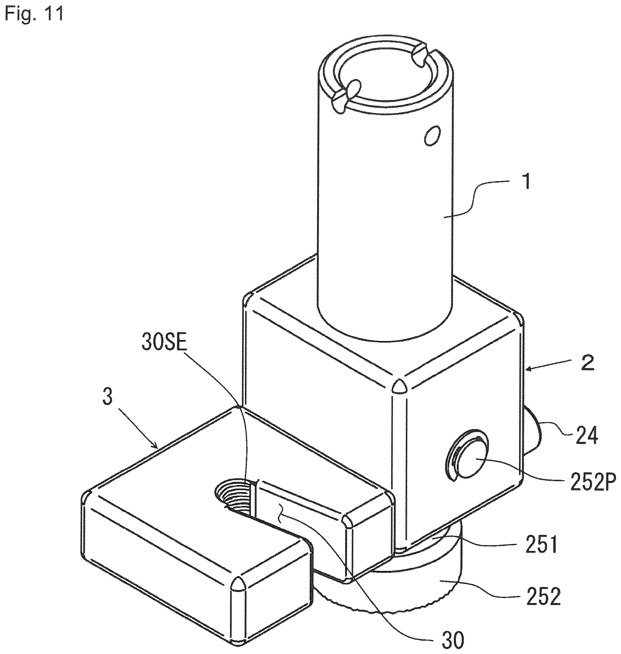

As in Embodiments 1, 2, and 3 as disclosed herein, the engagement means (3) may be constituted of the two engagement claws (31) protruding in parallel toward one side of the connector (2), and the two engagement claws (31) may form the recessed part (30) that is a U-shaped groove in a protruding base between the engagement claws (31) (Fig. 4, Fig. 6, and Fig. 8). As in Embodiments 4 to 9 according to the invention, the engagement plate having a predetermined substantially uniform thickness may fixedly extend from one side of the connector (2) in the predetermined extending direction in plan view, and the recessed part (30) as a predetermined notched channel may be formed by cutting the engagement plate from one end toward the inside of the plate in plan view (Figs. 11 and 12).

The wrench gear is built in the connector (2), and can rotate about the gear shaft that is vertical to each of the rod shaft and the attachment direction of the engagement means (3), that is, the extending direction. Through reciprocating inclination of the torque wrench body (1) from the set state, the wrench gear cumulatively rotates in one predetermined direction that is the gear fastening direction. The wrench gear also cooperates with a detection mechanism for anti-torque in the bending direction in the torque wrench body (1) and a detection portion-variable detection mechanism in the connector (2), and cumulatively rotates in the gear fastening direction, changing the detection portion in the detection mechanism. When a change of the detection portion of the detection mechanism exceeds a predetermined amount specified by the detection mechanism for anti-torque in the bending direction, the detection mechanism detects that the anti-torque reaches the set value (not illustrated).

### (Contact portion (21/25))

The contact portion (21/25) is supported at its upper end to be rotatable about the gear shaft of the wrench gear, and has a contact face that makes contact with the fixing face at its lower end. In the set state, the contact face of the contact portion (21/25) at the lower end is in press-contact with the fixing face without any displacement.

Through reciprocating inclination of the torque wrench body (1) from the set state, the contact portion (21/25) rotates about the gear shaft along with the wrench gear. More specifically, the contact portion (21) in Embodiment 1 is configured of a cylindrical rolling ring, and cumulatively rotates in one rotating direction of fastening a spring in the detection mechanism for anti-torque in the bending direction, with reciprocating inclination of the wrench body (1). The contact portion (25) in Embodiments 2 to 9 is configured of an extensible arm (251) that is supported at its upper end to be rotatable about the gear shaft of the wrench gear and extends downward, and a disc-like contact stage (252) exchangeably attached to a lower end of the arm (251). The contact portion (25) in Embodiments 2 to 9 reciprocatingly rotates about the support shaft at its upper end within a predetermined central angle range with reciprocating inclination of the torque wrench body (1). Simultaneously, the wrench gear cumulatively rotates in only one rotating direction of fastening a spring in the detection mechanism for anti-torque in the bending direction, and slidingly rotates in the opposite rotating direction. Configuration of each embodiment will be described below in detail.

### (Embodiment 1) (Reference)

The testing device for fixing-load verification in Embodiment 1 as illustrated in Fig. 1 to Fig. 4 includes an engagement means (3) that is formed of two parallel engagement claws (31) having an recessed part therebetween, and engages with a coupler (4) screwed with a fixing bolt (B). While the engagement means (3) provided on the side of a connector (2) engages with the fixing bolt (B), the cylindrical side face of a transversely mounted cylindrical contact portion (21) makes contact with a fixing face (F), into a set state where a rod-like torque wrench body (1) extends from the connector (2) obliquely upward with respect to the fixing face (F). Then, the torque wrench body (1) in the set state is inclined to generate a moment in the direction of picking up the fixing bolt (B), verifying the fixing load of the set torque based on detection of the anti-torque in the torque wrench. The testing device for fixing-load verification in Embodiment 1 includes, as basic components:
the rod-like signal-type torque wrench body (1) having a handle (11) at an upper end, and an anti-torque setting mechanism capable of setting anti-torque set value at a lower end, the torque wrench body extending along a predetermined rod shaft;
the connector (2) including a rotary wrench gear having a gear shaft that is orthogonal to the rod shaft, the connector (2) being fixed to a rod-like torque detection unit of the torque wrench body (1);
a contact portion (21/25) protruding from the inside of the connector (2), and having one end protrudingly fixed to the wrench gear in the connector (2) to be cumulatively rotatable and the other end in contact with the fixing face; and
the engagement means (3) fixed to the side of the connector (2), the engagement means having a recessed part (30) that can accommodate and engage with the fixing bolt (B). Each of the components will be described below in detail.

### (Torque wrench body (1))

The torque wrench body (1) in Embodiment 1 is an axial rod that lineally extends and has a circular cross section, and includes the handle (11) at its upper end and the detection mechanism for anti-torque in the bending direction in the rod-like torque detection unit at its lower end. An operating button (13), a setting-content display portion (12A), and a detection-content display portion (12B) are formed on the rod shaft below the handle (11). The detection-content display portion (12B) is a multistage luminous display bar, and variably displays a detection signal from the detection mechanism of the connector (2) with a staged luminous length (Fig. 1). In the set state, the rod shaft is inclined with a predetermined inclination angle (22θ) with respect to the fixing face (F).

Preferably, the torque wrench body includes a data storage means that stores a test result including traceability up to detection of a detection signal and detection contents, and a transmission means that appropriately transmits the test result to an external reception means. For example, a communication set that includes: a plurality of wrench gears having an object identification function, a positional information transmission means, and a wireless data transfer means; and a receiver having a data reception means can constitute a detection system capable of checking the test state in real time.

### (Connector (2))

The connector (2) in Embodiment 1 is integrally constituted of a connection tube (22) into which a cylindrical lower portion of the torque wrench body (1) is fitted, and a box-like frame (23) that is tiltedly provided under the connection tube (22) and has the rotary wrench gear therein. The connection tube (22) has the shape corresponding to an attachment portion of the existing torque wrench body (1), and is exchangeably attached to the torque wrench body (1) by using a connection pin (22P). A check groove (22C) for checking the attachment direction is formed by cutting a portion of an edge of the connection tube (22). The check groove (22C) is provided on the edge at the position corresponding to the extending direction of the engagement means (3) in plan view. The connection tube (22) has an anti-torque detection mechanism. The anti-torque detection mechanism cooperates with a detection mechanism for anti-torque in the bending direction in the torque wrench body (1) at its upper end, and cooperates with a wrench gear in a box-like frame (23) at its lower end. A variable detection portion that varies according to the cumulative number of rotations of the wrench gear is provided in the detection mechanism. A change amount up to detection of the detection mechanism for anti-torque in the bending direction is specified, and when the cumulative number of rotations of the wrench gear exceeds the change amount, the variable detection portion changes to output a detection sound or a detection signal.

The box-like frame (23) has an extending portion on one side, to which the bottom of the engagement plate is attached, and includes a wrench gear that can rotate about the gear shaft in one direction.

The engagement plate can be exchangeably fixed to the extending portion in the extending direction by using a connection bolt (24) that laterally penetrates the box-like frame (23). A rectangular frame hole is formed in the lower portion of the box-like frame (23), and a lower half of the transversely mounted cylindrical contact portion (21) protrudes through the frame hole. The contact portion (21) is integral with the rotary wrench gear built in the box-like frame (23), and rotates about the gear shaft along with the wrench gear. An obliquely cut notched face (20T) is formed at a corner of the lower portion of the box-like frame (23), which is outer than the frame hole, to prevent unnecessary external contact at reciprocating inclination.

### (Wrench gear)

The connector (2) has the wrench gear (for example, multistage planet gear having a ratchet mechanism) that can detect a torque from the engagement means (3) when the torque wrench body (1) is inclined, to verify whether or not the fixing bolt has a predetermined fixing load based on whether or not the wrench gear becomes a predetermined torque value. The wrench gear in the connector (2) is rotatable about the gear shaft that is orthogonal to each of the rod shaft of the torque wrench body and the fixing direction of the engagement means (3), and can detect the anti-torque at rotation in one direction as the fastening direction. The wrench gear cooperates with a torque setting mechanism of the torque wrench body 1, and sends a recognition signal or a recognition operation to the torque wrench body when the torque value set by the torque setting mechanism is detected. The torque wrench body 1 outputs the signal or suspends the operation according to the recognition signal or the recognition operation, enabling the user of the testing device of the present invention to recognize that the torque value reaches the set value.

### (Contact portion (21))

The contact portion (21) in Embodiment 1 is configured of a cylindrical rolling ring that rotates about the wrench gear, and reciprocatingly rotates about the pivot axis with reciprocating inclination of the torque wrench body (1). The cumulative rotating direction is a detection direction of the detection mechanism for anti-torque in the bending direction, and is an anticlockwise direction (left hand rotation) about the rod shaft of the torque wrench body (1) in Fig. 1. That is, when the torque wrench body (1) is inclined clockwise as represented by an arrow in the figure from the set state in Fig. 1, the contact portion (21) is still in press-contact with the fixing face (F), keeping the un-rotating state. Thus, at inclination of the torque wrench body (1) as represented by the arrow in the figure, the contact portion (21) rotates about the wrench gear anticlockwise (left hand rotation). The cylindrical contact portion (21) has a lot of inclined grooves that are parallel to the cylindrical axis in its face. The inclined grooves each are a substantially triangle inclined in one rotating direction in cross section orthogonal to the axis of the contact portion (21), and the groove deepest part is displaced from the groove inlet in one direction in cross sectional view. When the cylindrical contact portion (21) rotates in one rotating direction, the groove inlet of each inclined groove slides on the fixing face (F), and only when the cylindrical contact portion (21) rotates in the opposite rotating direction, the groove inlet of each inclined groove engages with the fixing face. Thereby, in the set state, the front end of the connector that is in contact with the fixing face can rotate about the predetermined gear shaft with respect to the connector.

### (Engagement means (3))

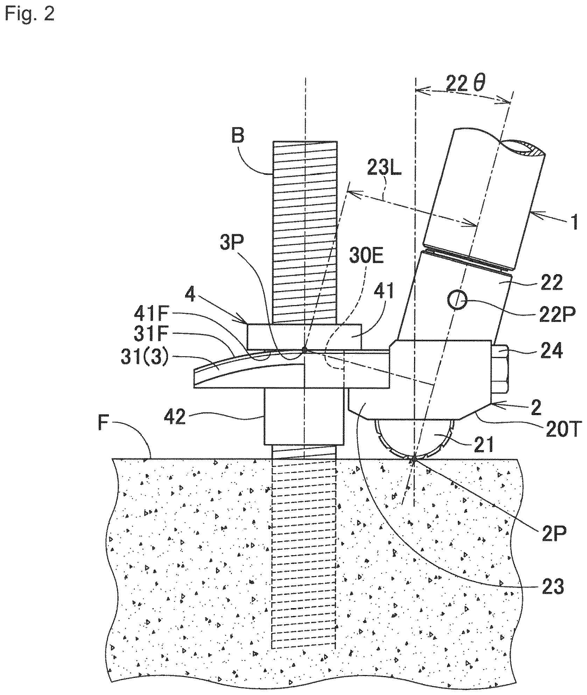

The engagement means (3) in Embodiment 1 is configured of the substantially U-shaped engagement plate having the two engagement claws (31) protruding from the side of the connector (2) in parallel, and the coupler (4) having the cylindrical portion (42) that can be screwed with the fixing bolt (B) (Fig. 2, Fig. 4). The engagement plate is configured of the two engagement claws (31) protruding from the side of the connector (2) in parallel, and the two engagement claws (31) form the recessed part (30) that is a U-shaped groove between the parallelly protruding engagement claws (31) (Fig. 4). As a result, the recessed part (30) in Embodiment 1 is oriented to the front side in the attachment direction, that is, the extending direction of the engagement means (3) when viewed from the connector (2).

The engagement plate of the engagement means (3) in Embodiment 1 fixedly extends from one side of the connector (2) in the predetermined extending direction by using the connection bolt (24) laterally penetrating the connector (2). The engagement plate has the two symmetrical engagement claws (31) protruding in the extending direction in parallel, which are fixed to the connector (2) at their bases. The recessed part (30) that is a U-shaped groove in plan view is formed between the two protruding engagement claws (31). An upper engagement face (31F) of each engagement claw (31) is a convex face moderately curved toward the front end. The collar (41) of the coupler (4) engagingly supports the engagement face (31F). The engagement claws (31) are angularly notched at lower outer corners, preventing unnecessary external contact.

In the coupler (4), the collar (41) extends from the outer circumference of the cylindrical portion (42), and an inner screw hole (4H) of the cylindrical portion (42) engages with the outer circumference of the fixing bolt (B). The collar (41) is an ellipse including opposed linearly-cut sides that are parallel to each other in plan view. The coupler (4) is accommodated at the deepest part of the recessed part (30) by setting one cut face (41E) to face the connector (2). In the present embodiment, a set of plural types of couplers (4A) (4B) having different inner screw holes (4H) are previously prepared according to the diameter or pitch of the fixing bolt (B), and any of the couplers (4) is selected and used (Fig. 4).

### (Usage example)

In a usage example of the testing device for fixing-load verification of the present invention, the anti-torque of the torque wrench body (1) is set and the torque wrench body (1) is reciprocatingly inclined. That is, after previously set into the set state illustrated in Figs. 1 and 2, the torque wrench body (1) is inclined in the direction represented by an arrow in Fig. 1, and is returned in the opposite direction to the direction represented by the arrow and then, is inclined in the direction represented by the arrow again.

Specifically, an anti-torque of the torque wrench body (1) is set using the operating button (13) and the display portion (12A), and after setting, the torque wrench body is brought into the set state illustrated in Figs. 1 and 2. To set the set state, first, the coupler (4) is screwed with the fixing bolt (B). Then, the coupler (4) fixed to the fixing bolt (B) is accommodated at the deepest part of the recessed part (30) between the two engagement claws (3), and the collar (41) of the coupler (4) is brought into contact with the upper engagement faces (31F) of the engagement claws (31), thereby engaging the engagement claws (31) with the coupler (4). Then, the contact portion (21) is brought into contact with the fixing face near the fixing bolt B to be fixedly positioned there, achieving the set state (Fig. 1, Fig. 2). The cylindrical contact portion (21) is surface-treated to rotate in only one rotating direction and slide in the other rotating direction in the set state. Thereby, in the set state, the front end of the connector that is in contact with the fixing face can rotate about the predetermined gear shaft with respect to the connector. By alternately repeating inclination of the torque wrench body (1) from the set state to the other side and rising of the torque wrench body (1) to one side, the rod shaft of the torque wrench body (1) reciprocates within a predetermined central angle range using the cylindrical axis of the contact portion (21) as a rotational center, thereby repeatedly picking up the engaged coupler (4). The wrench gear is rotated until the detected torque reaches a predetermined set torque value to perform a fixing-load verification test of the fixing bolt (B).

### (Contact stage (5))

In Embodiment 1, the contact stage (reference sign 5 in Fig. 5) of adjustable height is detachably fitted to the contact portion (21) (Fig. 3 and Fig. 4). The protruding height of the connector (2) from the fixing face (F) can be adjusted by attaching the contact stage (5) at the front end of the connector. As illustrated in Figs. 1 and 2, the contact stage (reference sign 5 in Fig. 5) may be omitted. However, the contact stage (reference sign 5 in Fig. 5) may be used for setting according to an engageable height with the fixing bolt (B) using an attachment (fixed plate (BP)) or an attachable height of the coupler (4).

Specifically, the contact stage (5) is a rectangular base plate having an inner groove (51) corresponding to the side face of the cylindrical contact portion (21), the inner groove being laterally formed on the upper face of the base plate. Parallel leg bolts (52) for adjusting a contact height penetrate and are screwed into the base plate in vicinity of its four corners. An operational polygonal hole (52H) is formed in an upper end of each leg bolt (52) to make the screwing length adjustable (Fig. 4). As illustrated in Fig. 3, in the set state, the cylindrical face of the contact portion (21) is fitted in the inner groove (51). In this state, the cylindrical contact portion (21) is surface-treated so as to rotate in one rotating direction and slide in the other rotating direction.

### (Embodiment 2) (Reference)

A testing device for fixing-load verification in Embodiment 2 illustrated in Fig. 5 to Fig. 8 includes an engagement means (3) formed of two parallel engagement claws (31) having an recessed part therebetween, with which a coupler (4) screwed with a fixing bolt (B) engages, as in Embodiment 1. The engagement means (3) extending from the side of the connector (2) engages with the fixing bolt (B), and in the engaged state, a disc-like contact portion (252) attached to the lower end of an arm (251) extending downward from the connector (2) is brought into contact with a fixing face (F), and a rod-like torque wrench body (1) rises from the connector (2) vertically with respect to the fixing face (F) in a set state. Then, the torque wrench body (1) in the set state is inclined in the opposite direction to the extending direction of the engagement means (3), to generate a moment in the direction of picking up the fixing bolt (B), verifying the fixing load of the set torque based on detection of the anti-torque in the torque wrench. The testing device for fixing-load verification in Embodiment 2 is different from the testing device for fixing-load verification in Embodiment 1 in that the box-like frame of the connector (2) is vertically attached, and that a contact portion (25) is a reciprocating arm structure including the arm (251) that rotates about the wrench gear shaft and the contact stage (252). Differences between the present embodiment and Embodiment 1 are mainly described below. Undescribed configuration, internal mechanism, and usage are the same as those in Embodiment 1.

### (Torque wrench body (1))

The torque wrench body (1) in Embodiment 2 is a linearly-extending rod having a rectangular cross section, and has a handle (11) at its upper end and a detection mechanism for anti-torque in the bending direction in a rod-like torque detection unit at its lower end. The lower end is shaped like a square pyramid to have a short cylindrical tip. An operating button (13) and a setting-content and detection-content display portion (12A) are formed on the rod shaft below the handle (11). The setting content or detection content of the anti-torque at operation is variably displayed on a screen of the display portion (Fig. 1). In the set state, the rod shaft rises vertical to the fixing face (F).

### (Connector (2))

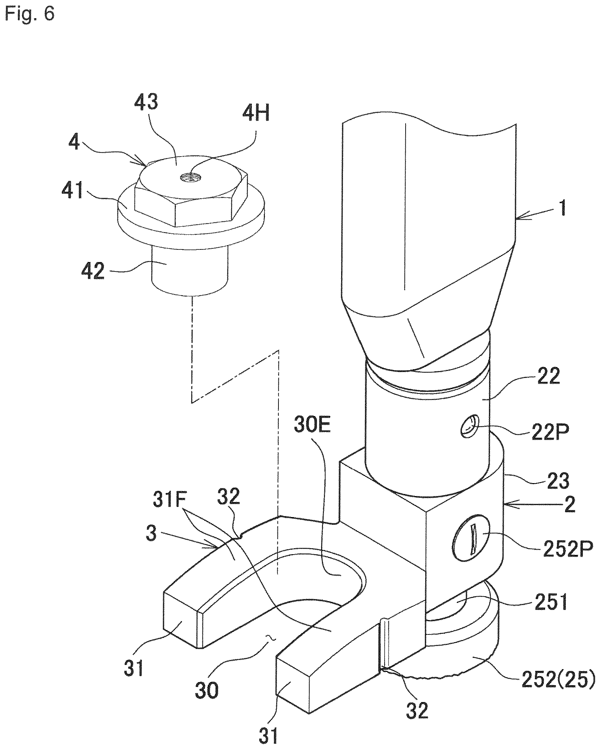

The connector (2) in Embodiment 2 is integrally constituted of a connection tube (22) into which a short cylindrical lower portion of the torque wrench body (1) is fitted, and a columnar box-like frame (23) attached to a lower portion of the connection tube (22) (Fig. 5 and Fig. 6). The connection tube (22) has a short tubular shape corresponding to a short cylindrical attachment portion of the torque wrench body (1), and is exchangeably attached to the torque wrench body (1) by using a connection pin (22P).

The box-like frame (23) is a vertical columnar body having a semicircular cross section, one side of which is cut into a vertical flat face, and the vertical flat cut face is a mounting face for the engagement means (3), from which the engagement plate extends. The engagement plate (31) of the engagement means (3) integrally extends from the mounting face for the engagement means (3) in the direction lateral to the axis of the cylindrical body. A circular frame hole is formed in the lower portion of the box-like frame (23), and a vertically mounted cylindrical arm (251) of the contact portion (21) protrudes through the frame hole. The arm (251) has a horizontal support hole (251H) penetrating thereinto at its upper end, and is supported along with the rotary wrench gear built in the box-like frame (23) using opposed pivoting pins (251P, 252P). The pivoting pins (251P, 252P) are coaxial with the gear shaft of the wrench gear. The arm reciprocates about the axes of the pivoting pins (251P, 252P), that is, the gear shaft of the wrench gear within a predetermined inclination angle range. With the reciprocation of the arm, the wrench gear not shown in the connector (2) rotates about the gear shaft in one rotating direction. The lower face of the box-like frame (23) has an L-shaped notched face in side view, which is displaced upward with respect to the lower face of the engagement plate, to prevent unnecessary external contact at reciprocating inclination.

### (Contact portion (25))

In the contact portion (25) in Embodiment 2, the arm (251) supported (that is, axially supported) to be rotatable about the gear shaft of the wrench gear in the connector (2), and the contact stage (252) having a contact face that is in contact with the fixing face are vertically combined with each other. More specifically, the contact portion (25) in Embodiment 2 is configured of the cylindrical extendable arm (251) including an upper semispherical portion that is supported to be rotatable about the gear shaft of the wrench gear and extends downward, and the disc-like contact stage (252) of any thickness exchangeably attached to the lower cut face of the arm (251) using an attachment pin (25P). The contact stage (252) has an embossed lower contact face (252T) having a lot of projections. In the set state, the contact face (252T) of the contact stage (252) is in press-contact with the fixing face without any displacement from the fixing face. In the present embodiment, plural types of contact stages of different thicknesses (a first contact stage 252A and a second contact stage 252B) are prepared in advance, and any of the contact stages is exchangeably attached using the attachment pin (25P) according to the state at setting including presence/absence of attachments.

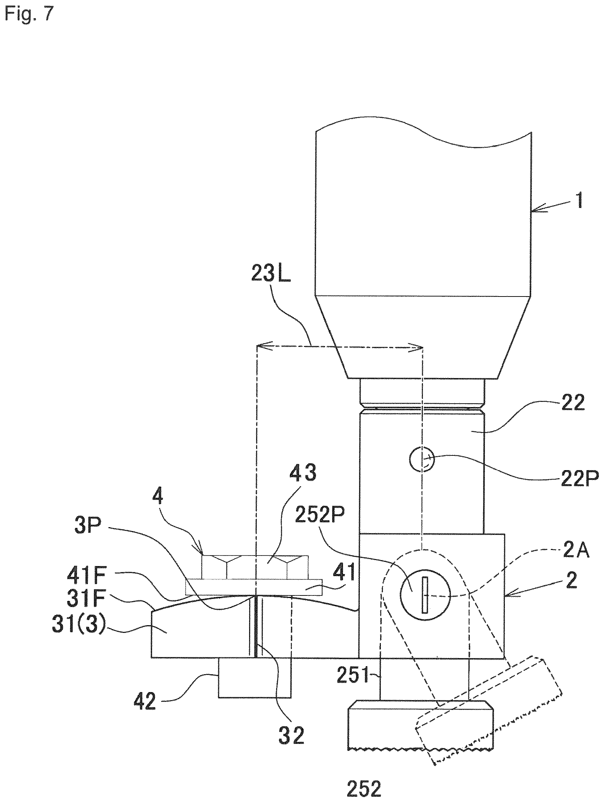

Through the reciprocating inclination of the torque wrench body (1) from the set state, the arm (251), the upper portion of which is supported, and the contact portion (25) reciprocatingly rotate about the gear shaft (2A) within the predetermined central angle range (Fig. 7). Simultaneously, the wrench gear cumulatively rotates in one rotating direction of fastening a spring in a detection mechanism for anti-torque in the bending direction, and slidingly rotates in the opposite rotating direction.

### (Engagement means (3))

The engagement means (3) in Embodiment 2 is configured of the substantially U-shaped engagement plate having the two engagement claws (31) protruding from the side of the connector (2) in parallel, and the coupler (4) having the cylindrical portion (42) that can be screwed with the fixing bolt (B) (Figs. 6, 7, and 8). The engagement plate of the engagement means (3) is vertically fastened to the vertical flat cut face of the connector (2), and fixedly extends in the lateral extending direction. The engagement plate has the two symmetrical engagement claws (31) protruding in the extending direction in parallel, which are fixed to the connector (2) at their bases. A longitudinal groove (32) that is orthogonal to the extending direction, as a means for representing the position of the shaft of the fixing bolt (B) at accommodation of the fixing bolt at the deepest part, is formed in an outer side face of each of the two engagement claws (31). The center of the longitudinal groove (32) corresponds to the center axis of the coupler (4), that is, the axis of the screwed fixing bolt (B) at accommodation of the coupler (4) in the recess inner face (30E) that is the deepest part of the recessed part. When the coupler (4) screwed with the fixing bolt (B) is accommodated at the recessed part (30), the longitudinal groove (32) is aligned with the central axis of the coupler or the shaft of the fixing bolt (B). An upper engagement face (31F) of each engagement claw (31) is convex from the bottom toward the front end in the extending direction, and supports and engages with the collar (41) of the coupler (4) on the engagement face (31F). In the present embodiment, the top of the convex engagement face (31F) corresponds to the center of the longitudinal groove (32) (Fig. 7). The engagement claws (31) are angularly notched at lower outer corners, preventing unnecessary external contact.

The coupler (4) is formed by integrally extending the collar (41) from the outer circumference of the upper portion of the cylindrical portion (42) having the outer circumferential face of the same curvature as the curvature of the recess inner face (30E), and fixedly providing a fastening polygonal nut (43) integrally with the collar (41). The cylindrical portion (42), the collar (41), and the polygonal nut (43) are coaxially connected to one another in the vertical direction, and an inner screw hole (4H) having an inner screw is formed over the cylindrical portion (42), the collar (41), and the polygonal nut (43). The cylindrical portion (42) and the collar (41) are a small-diameter circle and a large-diameter circle, respectively, in plan view, and the polygonal nut (43) is a hexagonal nut. Fig. 6 illustrates only one coupler, and only one type of coupler (4) is used. However, in the present embodiment as in Embodiment 1, a set of plural types of couplers (4A) (4B) having different inner screw holes (4H) may be previously prepared according to the diameter or pitch of the fixing bolt (B), and any of the couplers (4) may be selected and used.

### (Embodiment 3) (Reference)

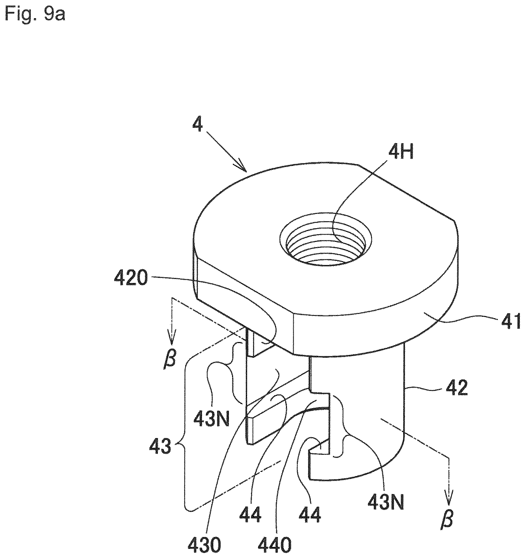

Fig. 9a to Fig. 9c illustrate a coupler (4) in a testing device for fixing-load verification in Embodiment 3. The testing device for fixing-load verification in Embodiment 3 is the same as the testing device in Embodiment 2 except for shape and structure of the coupler (4). Undescribed configuration, internal mechanism, and usage are the same as those in Embodiment 1.

The coupler (4) in Embodiment 3 is not directly fitted to a fixing bolt (B), but is fixed to the fixing bolt (B) via a general-purpose polygonal nut (not illustrated) accommodated in the coupler (4). That is, an engagement means (3) in Embodiment 3 includes a polygonal nut (N) screwed with the fixing bolt (B), the coupler (4) that accommodates the polygonal nut (N), and an engagement plate that engages and holds the coupler (4) in an recessed part between two parallel engagement claws (31). The coupler (4) is engaged using the same engagement means (3) as the engagement means (3) in Embodiment 1.

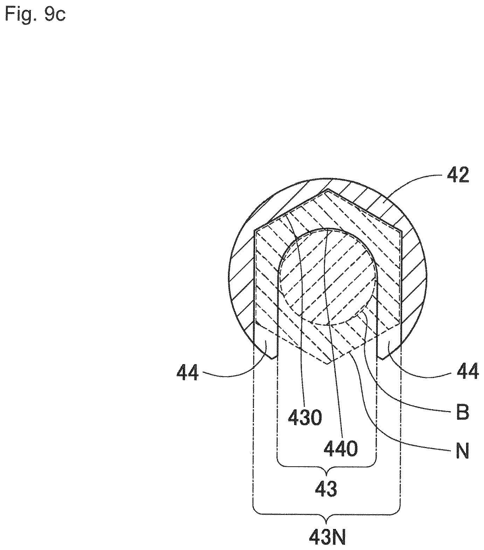

Specifically, the coupler (4) in Embodiment 3 is formed by integrally extending a collar (41) having a larger diameter than a cylindrical portion (42) from the outer circumference of the upper portion of the cylindrical portion (42) that has a cylindrical circumferential face corresponding to a recess inner face (30E) and has a hole of larger diameter than the fixing bolt (B), and forming an accommodation hole (430), which is a polygonal columnar hole that can accommodate a polygonal nut (N) from side, in one side of the cylindrical portion (42). As illustrated in Fig. 9c, the accommodation hole (430) has a face having partial polygonal cross section corresponding to the angular shape of the polygonal nut (N), and also has a rectangular frame-like accommodation opening (43N) on one side of the cylindrical portion (42) and at the longitudinal center of the cylindrical portion (42). The accommodation hole (430) has an accommodation hole bottom (44) formed of a semielliptical hole edge in its lower portion, and the non-rotating polygonal nut (N) can be accommodated into and held on the accommodation hole bottom (44) through the opening (43N).

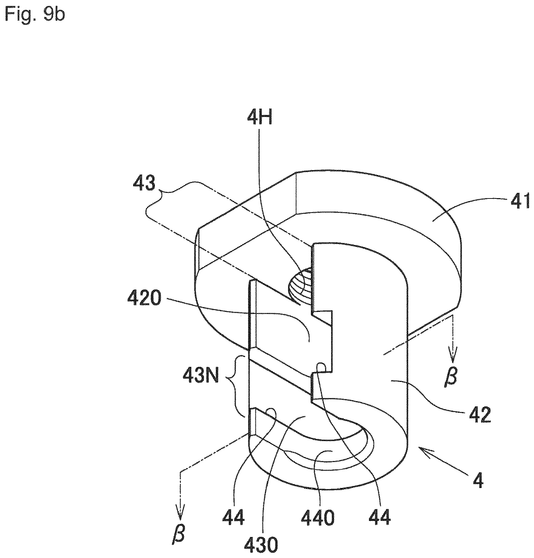

In the present embodiment, the cylindrical portion (42) has a narrow side opening (43) corresponding to the outer diameter of the fixing bolt (B) over the entire length of one side face, and the accommodation opening (43N) having a larger width than the side opening (43) is formed at substantially central portion (except for the upper end and the lower end) in the lengthwise direction of the side opening (43) (Figs. 9a, 9b, and 9c). Semielliptical opening inner faces (upper opening inner face (420) and lower opening inner face (440)) in sectional view are formed in an upper inner portion and a lower inner portion of the side opening (43) of the cylindrical portion (42). The accommodation hole (430) connected to the accommodation opening (43N) forms the accommodation hole bottom (44).

The collar (41) is an ellipse including opposed linearly-cut sides that are parallel to each other in plan view. The coupler (4) is accommodated at the deepest part of the recessed part (30) by setting one cut face (41E) as opposed to the connector (2).

Figs. 9a, 9b, and 9c illustrate only one coupler, and only one type of coupler (4) is used. However, in the present embodiment as in Embodiment 1, a set of plural types of couplers (4A) (4B) having different inner screw holes (4H) may be previously prepared according to the diameter or pitch of the fixing bolt (B), and any of the couplers (4) may be selected and used.

### (Embodiment 4)

A testing device for fixing-load verification in Embodiment 4 illustrated in Fig. 10, Fig. 11, and Fig. 12(a) includes an engagement means (3) that directly engages a fixing bolt (B) having an outer screw with a rectangular engagement plate (33) of substantially uniform thickness, in which a recessed part (30) with multistage engagement grooves (30SE) is formed. In the testing device for fixing-load verification in Embodiment 4, a recess inner face (30E) located at the deepest part of the recessed part has the same diameter as the fixing bolt, and has engagement grooves of the same pitch as the bolt in its inner side face. Accordingly, the fixing bolt can be directly engaged with the screw hole of the shaft without using an attachment such as a coupler, eliminating the operation of screwing a screw with the fixing bolt to improve operability.

More specifically, the engagement plate (33) that is the engagement means (3) in the present embodiment extends from one side of the connector (2) in the extending direction, and is exchangeably fixed to the connector (2) via a connection bolt (24) penetrating a cubic box-like frame of the connector (2). The recessed part (30) as a predetermined notched channel is formed by cutting the engagement plate from one end toward the inside of the plate in plan view, and the notched channel at least partially includes a channel direction that is different from the extending direction in plan view. For example, as illustrated in Fig. 10, when the engagement plate (33) is viewed as extending leftward from the connector (2), the recessed part (30) is provided from a front face toward the center of the engagement plate (33). The recessed part (30) is a linear or curved (bent or curved) notched channel extending from an opening end of one side face toward the inside of the engagement plate (33) in plan view, and the deepest part forms the semicircular recess inner face (30E) in plan view.

### (Recess inner face (30E))

The recess inner face (30E) formed at the deepest part of the recessed part (30) is a semi-arc corresponding to the outer shape of the fixing bolt (B) (that is, the arc has a slightly larger diameter than the bolt) in plan view, and is concentrically located with the engagement plate (33) in plan view (Fig. 12(a)). A left half or more of the recess inner face (30E) is opposed to the extending direction of the engagement plate (33). The engagement grooves (30SE) shaped like a partial inner screw are formed over the recess inner face (30E). The engagement grooves (3SE) are formed in multi stages so as to conform the thread of the fixing bolt (B). When the fixing bolt (B) is accommodated at the deepest part of the recessed part (30), the engagement grooves (30SE) engage with the thread of the fixing bolt (B). Since the device can be engaged merely by accommodating the fixing bolt (B) at the deepest part of the recessed part (30) without attaching an engagement mechanism or performing a particular engaging operation, even when the device is set to the fixing bolt (B) of the fixing face (F) at a high place such as a ceiling, the device can be engaged remotely using a handle (11) with ease.

### (Notched channel)

In Embodiment 4, as illustrated in Fig. 12(a), the notched channel of the recessed part (30) is an oblique linear notched channel that crosses the illustrated leftward extending direction with an acute inclination angle less than 90 degrees in plan view. In plan view, the channel linearly extends in a slanting direction with respect to four sides of the engagement plate (33), and crosses the extending direction of the engagement plate with an inclination angle less than 90 degrees from the opening end to the deepest part of the notched channel of the recessed part (30). With the above-mentioned channel, when viewed from the side face of the engagement plate (33), the opening end of the recessed part (30) is offset from the recess inner face (30E) located at the deepest part. Thus, in the set state where the opening end of the recessed part (30) is viewed as a front face, as illustrated in Fig. 10, when viewed from the side face of the engagement plate (33), only one half of the fixing bolt (B) appears, and the other half overlaps with the opening end and becomes hidden.

### (Usage)

Describing the usage including the engaging operation in the present embodiment, the fixing bolt (B) is accommodated from one side face of the connector (2) along the notched channel until the fixing bolt (B) makes contact with the recess inner face (30E) located at the deepest part, and the multistage engagement grooves (30SE) provided in the recessed part (30) are engaged with the outside screw of the fixing bolt (B). In the state where the fixing bolt (B) is accommodated and engaged, the same disc-like contact portion (252) as that in Embodiment 2, which is attached to the lower end of the arm (251) extending from the lower portion of the connector (2), is brought into contact with the fixing face (F), and the rod-like torque wrench body (1) is set to the set state where the torque wrench body (1) rises from the connector (2) vertically to the fixing face (F) (Fig. 10). Fig. 10 illustrates an example of the set state where a ceiling face is the fixing face (F), and the fixing-load testing device in Embodiment 4 is set with respect to the fixing bolt (B) having a full screw set in a frame of the ceiling. In the set state illustrated in Fig. 10, even when the torque wrench body (1) is repeatedly inclined in the extending direction of the engagement means (3) and the opposite direction, the engaged state can be readily ensured during the verification test without displacing the fixing bolt (B) in the recessed part (30). In the configuration illustrated in Embodiment 4, a plurality of engagement plates having different widths of the recessed part (30), and/or a plurality of engagement plates having different pitches of the multistage engagement grooves (30SE) in the recess inner face (30E), and/or a plurality of engagement plates having different attachment directions to the connector (2), that is, different orientations of the opening end of the recess inner face (30E) may be prepared in advance, and any of the engagement plates may be exchanged according to the diameter or pitch of the fixing bolt (B). Alternatively, by fitting an attachment including a portion of the recessed part (30) into one engagement plate, and exchanging the attachment with any type of prepared attachment, the recess width of the recessed part (30), and/or the pitch of the multistage engagement grooves (30SE), and/or the attachment direction to the connector (2) may be changed.

Undescribed configuration, internal mechanism, and usage are the same as those in Embodiment 2.

### (Embodiments 5 to 9)

Fig. 10(b) to Fig. 12(f) illustrate planar shape of the engagement plates in Embodiments 5 to 9, respectively. Components of the testing device for fixing-load verification in each of Embodiment 5 to 9 are the same as those of the testing device in Embodiment 4 except for the shape and opening channel of a recessed part (30) formed in the engagement plate. Undescribed configuration, internal mechanism, and usage are the same as those in Embodiment 1.

Describing a recess inner face (30E) formed at the deepest part in each of Embodiment 5 to 9, in Embodiment 5 illustrated in Fig. 12 (b), the semicircular recess inner face (30E) is orthogonal to the illustrated leftward extending direction with 90 degrees in plan view, and an illustrated left half of the recess inner face (30E) has an inner side face opposed to the extending direction. In Embodiment 6 illustrated in Fig. 12(c), the semicircular recess inner face (30E) crosses the illustrated leftward extending direction with an angle less than 90 degrees in plan view, and an illustrated left half or more of the recess inner face (30E) has an inner side face opposed to the extending direction. In each of Embodiments 7, 8, and 9 illustrated in Figs. 12(d), 12(e), and 12(f), respectively, the semicircular recess inner face (30E) is orthogonal to the illustrated leftward extending direction with 90 degrees in plan view, and the entire recess inner face (30E) has an inner side face opposed to the extending direction.

Describing the notched channel in each of Embodiment 5 to 9 in plan view, in Embodiment 5 illustrated in Fig. 12(b), the notched channel is a vertical linear notched channel that is orthogonal to the illustrated leftward extending direction with 90 degrees through the opening end to the deepest end in plan view. In Embodiment 6 illustrated in Fig. 12(c), the notched channel is a curved notched channel that runs to the upper right with an angle exceeding 90 degrees, is gradually curved leftward, and crosses the illustrated leftward extending direction at the deepest part with 90 degrees or less in plan view. In each of Embodiments 7, 8, and 9 illustrated in Figs. 12(d), 12(e), and 12(f), respectively, the notched channel is a vertical linear notched channel that is orthogonal to the illustrated leftward extending direction with 90 degrees or less in plan view, and is curved leftward in the same direction as the extending direction, and then, overlaps with the illustrated leftward direction at the deepest part. In the configuration in Embodiment 4, an engagement plate set including at least any of the engagement plates in Embodiments 5 to 9 is previously prepared, and any engagement plate may be replaced.

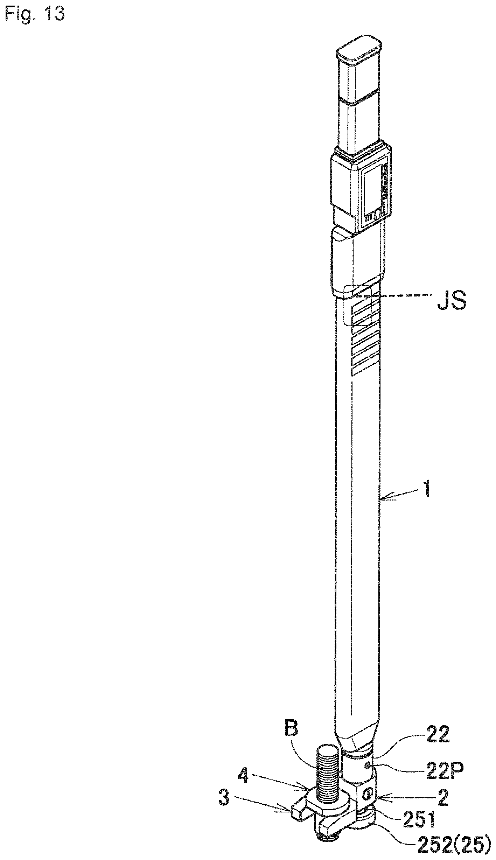

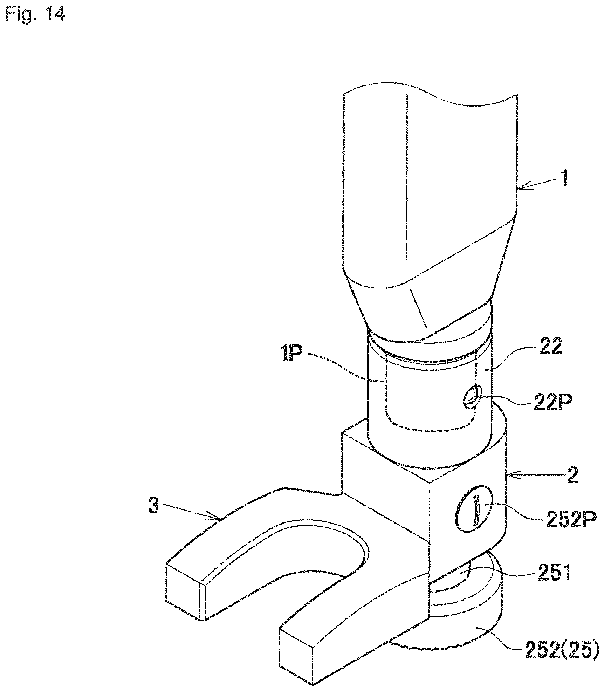

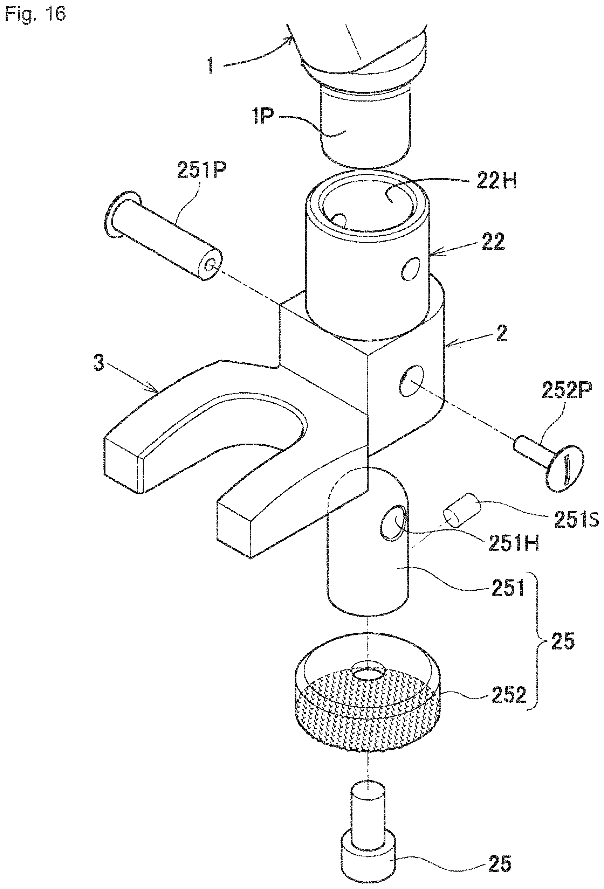

The testing device for fixing-load verification in Embodiment 10 (Reference) as illustrated in Fig. 13 to 16 includes:
a signal-type torque wrench body (1) having a handle (11) at an upper end, and a rod-like anti-torque detection unit (1P) at a lower end, the anti-torque detection unit including a detection mechanism for detecting that anti torque detected by the anti-torque detection unit reaches a set value;
a connector (2) that fixedly covers the anti-torque detection unit (1P) at the lower end of the torque wrench body (1);
a contact portion (21/25) that protrudes outward from a lower end of the connector (2), and makes contact with a fixing face (F) at its front end; and
an engagement means (3) that fixedly protrudes from one side of the connector (2), and engages with a fixing bolt (B) protruding from the fixing face (F).

The rod-like anti-torque detection unit (1P) includes a sensor for detecting an anti-torque in the bending direction, is fitted into a tube hole (22H) of a connection tube (22) of the connector (2), and is fixedly pressed from both sides using a connection pin (22P). The connector (2) is integrally configured of a semi-cylindrical frame and the connection tube (22), which are rigid members, and a bifurcated engagement means (3) is fixed to the side of the connector. The engagement means (3) can be exchanged with any of the engagement means (3) in Embodiments 4 to 9.

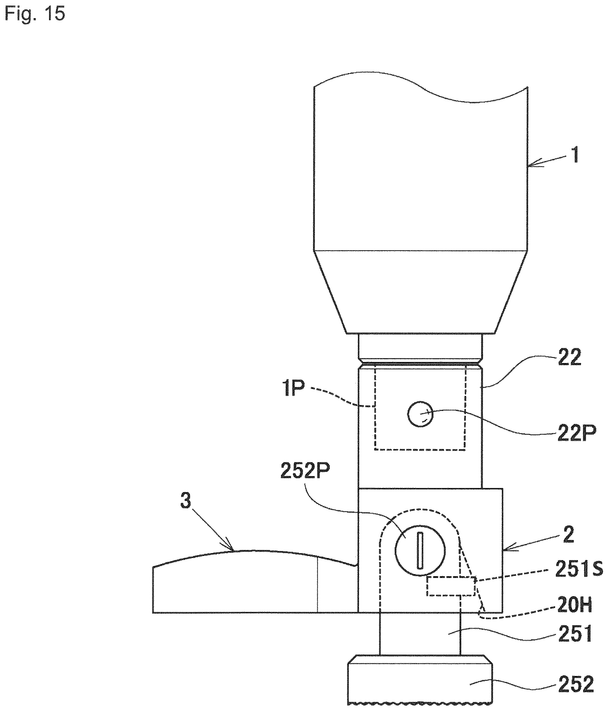

In the contact portion 25, an exchangeable contact stage (252) is attached to a tip of an arm (251). Any of a plurality of contact stages (252) of different thicknesses can be selected and attached. In Embodiment 10, a spring as an elastic member 20S is fixedly fitted to one side of the arm (251) in the rotating direction. The elastic member (20S) is a rod-like body having a lateral axis, and is axially pressed to generate an elastic reaction force, and as illustrated in Fig. 15, is fixedly held in a flat accommodation hole (20H) of the arm (251) formed in the lower portion of the connector (2). The arm (251) is pressed to left in the figure at all times by the elastic reaction force of the elastic member (20S), thereby being pressed by a front vertical face of the accommodation hole (20H) to keep its vertical state without freely moving due to gravity.

In use, the fixing bolt (B) engages with the engagement means (3), and the contact portion (21/25) of the connector (2) makes contact with the fixing face (F) in an opposed manner into a set state,
the torque wrench body (1) is inclined toward the other side while the contact state of the contact portion (25) with the fixing face (F) is kept in the set state, thereby causing the contact portion (21/25) in contact with the fixing face to incline with respect to the connector (2) according to the inclination angle. At this time, the rod-like anti-torque detection unit (1P) detects a reaction moment to the force of the engagement means (3) that engages with and rotates the fixing bolt (B). When the detected anti-torque reaches a predetermined torque set value, the detection mechanism built in the torque wrench body (1) outputs a detection sound or emits detection light, indicating that the anti-torque reaches the torque set value.

The torque wrench body (1) in the present embodiment has an acceleration sensor at a position away from the contact portion by a predetermined distance to detect the acceleration of the anti-torque generated when the torque wrench body is inclined in the engaged state and detects the anti-torque. An amount of detected acceleration is a change amount of the inclination angle at the position of the acceleration sensor. An escaping amount of the fixing bolt (B) at inclination is acquired by subtracting an elastically-deformed amount of the rod-like torque wrench body (1) in a set distance between the contact portion and the acceleration sensor (JS) from the amount of detected acceleration. In the present embodiment, when the detected amount of the acceleration sensor reaches or exceeds the predetermined set value, it is determined that the fixing bolt is escaped to operate the detection mechanism in the torque wrench body.

The engagement means (3) includes a recessed part (30) that accommodates the fixing bolt (B) from side in a front end of a side face, and
in the set state, a protruding portion of the fixing bolt (B) is fixedly accommodated in the recessed part (30) to lock the fixing bolt (B) in the recessed part (30).

### (Actions and effects)

The testing device for fixing-load verification in each of the embodiments of the present invention has the configuration in each of the above-mentioned Embodiments 4 to 9, and achieves following actions and effects.

The testing device for fixing-load verification in each of the embodiments includes the rod-like torque wrench body (1) having the torque setting mechanism that can set the anti-torque set value at a front end;
the connector (2) fixed to the rod-like torque detection unit of the torque wrench body (1) that includes a rotary wrench gear having the gear shaft that is orthogonal to the torque wrench body (1) as a wrench mechanism;
the contact portion (21/25) that protrudes toward the fixing face (F) at the tip of the connector (2), and extends from the connector so as to be rotatable about the predetermined axis, and makes contact with the fixing face; and
the engagement means (3) that is fixed from one side of the connector (2) in the predetermined extending direction and can engage the fixing bolt (B) with the certain center distance (23L).

The fixing bolt (B) directly or indirectly engages with the engagement means (3), and the contact portion (21/25) makes contact with the fixing face (F) in an opposed manner into a set state, and
in the set state, the contact point of the contact portion (21/25) with the fixing face (F) is defined as a fixed point (2P), and the torque wrench body (1) is rotated to the predetermined set torque, to perform the fixing-load test for the fixing bolt (B).

With the above-mentioned configuration, by engaging the fixing bolt (B) with the certain center distance (23L), and performing the same operation as fastening of the torque wrench using the general-purpose torque wrench, a moment applied to the force application point (3P) can be converted from the value of the fastening torque (anti-torque) of the torque wrench, and accurately recognized.

The above-mentioned components can be individually separated or exchanged according to the type of the fixing bolt (B), the fixing state, or the state of the attachment, or any broken component can be exchanged and repaired.

The engagement means (3) has the recessed part (30) that accommodates the fixing bolt (B) from the side on the front end of the side face, and accommodates the protruding portion of the fixing bolt (B) in the recessed part (30) to engage the fixing bolt at the deepest part or the position near the deepest part in the recessed part (30). When the torque wrench body (1) is inclined in the engaged state, a moment around the contact point (2P) (moment including a moment component for the center distance (23L)) generates at the force application point (3P). At this time, the force is obliquely applied to the recessed part (30), improving the engaging force of the engagement structure to reliably keep the engaged state.

The testing device for verification can be set merely by being inserted into the opened recessed part, and attaching the coupler 4 to the fixing bolt above the device. For this reason, to set the testing device for verification, it is no need to detach the bolt and the fixing plate in advance, as long as the place for attachment of the fixing bolt as the fixture to be inspected to the engagement means (3) (engagement place) and the place for attachment of the fixing bolt to the coupler 4 are ensured. This eliminates the need to previously detach the members such as the bolt and the fixing plate from the rod-like steel member.

Since the verification test can be readily performed by applying a moment without picking up the rod-like steel member by use of a pressure pump as in the conventional measurement test of actual fixing force, the pulling test itself can be performed readily and rapidly. Such readiness of attachment and pulling test enables 100 percent inspection.

Since the testing device for verification can be set merely by insertion through the opened recessed part, work in the vicinity of the fixing portion is not required. For this reason, an axial body of the fixture in the ceiling, such as a light-weighted ceiling hanging bolt, and various support bolts in the ceiling, which is fixed at a narrow and high place, can be readily set from a relatively remote location without any operation in the vicinity of the fixing portion.

The signal-type torque wrench provided with a sensor for detecting a bending stress can convert a set value and a detection value of the fastening torque into a pickup moment value of the fixing bolt (B) by the engagement means (3), thereby readily detecting the fixing force of the fixing bolt (B) to the fixing face (F). The detection can be made merely by engaging the engagement means (3) with the fixing bolt (B), and reciprocatively rotating the torque wrench body (1) within the predetermined angle range while fixing the contact portion (21/25) to the fixing face (F). This eliminates complicated work such as installation of a pressure pump. Especially, since the protruding portion of the fixing bolt (B) can be accommodated only by inserting the engagement means (3) sideward through the opening of the recessed part (30), the fixing bolt can be readily engaged and disengaged, greatly improving workability. At this time, the acceleration sensor can detect the pick-up amount of the bolt by pulling.

The engagement means (3) can be simply constituted of the engagement plate including the recessed part (30) formed by cutting the engagement plate at low costs. The fixing bolt (B) can be engaged and held by inserting the fixing bolt (B) from one end of the engagement plate toward the inside of the plate along the predetermined notched channel and then, engaging the deepest part of the recessed part (30) with the fixing bolt (B), achieving good operability. Here, the notched channel at least partially includes the channel direction that is different from the extending direction. That is, at least a portion of the channel direction of the notched channel is different from the extending direction. For this reason, once the fixing bolt (B) engages with the deepest part of the recessed part (30), even when the torque wrench body (1) or the connector (2) wrongly moves in the extending direction, the engagement is hardly released. Therefore, the set state where the fixing bolt (B) engages with the fixing face can be reliably kept. The engagement of the fixing bolt (B) can be readily released by moving the engagement plate along the notched channel in the opposite direction to the insertion direction. This realizes the testing device for fixing-load verification that has good operability in setting and releasing of setting, and cannot be accidentally released in engagement.

The inner side face of the recess inner face (30E) located at the deepest part of the recessed part (30) is at least partially opposed to the extending direction of the engagement plate. Thus, when the torque wrench body (1) is inclined in the opposite direction (to right in Fig. 12) to the extending direction (for example, to left in Fig. 12), a force is applied such that the inner side face of the recess inner face (30E) and the fixing bolt (B) are in press-contact with each other in an opposed manner. Thus, the engagement with the fixing bolt (B) cannot be easily released, reliably maintaining the set state at inclination. Since at least a portion of the notched channel is inclined and crosses the extending direction of the engagement plate in plan view, even when the torque wrench body (1) or the connector (2) wrongly moves in the direction that is different from the extending direction, such as the direction that is orthogonal to the extending direction in plan view, the engagement state can be kept.

By forming multistage engagement grooves (3SE) along the thread of the fixing bolt (B) at the deepest part of the recessed part (30), the fixing bolt (B) can reliably engage with the engagement grooves (3SE). The multistage means that a plurality of engagement grooves are formed in parallel over the thickness of the engagement means, thereby forming a plurality of engagement protrusions in parallel between the grooves.

The coupler is accommodated in the deepest part at which the coupler (4) reaches the recessed part (30) and becomes unmovable, keeping a center distance (23L) between the rotational shaft, that is, the gear shaft and a force application point of the fixing bolt (B) uniform at repeated inclination of the torque wrench body (1), to enable reliable conversion into a moment detection value, that is, a pickup torque value.

In the fixing portion of the fixing bolt (B), attachments such as a fixed plate (BP) and a nut are generally attached on the fixing face or around the fixing bolt, and the engageable portion of the fixing bolt (B) is often separated from the fixing face (F). With the above configuration, the contact portion (21/25) is provided with the contact stage (5/252) having a required height (thickness) according to the distance between the engageable portion of the fixing bolt (B) and the fixing face (F), thereby setting a suitable protruding height from the connector (2) to the fixing face (F). Thereby, even when an attachment is attached, the device of the present invention can be readily set without detaching the attachment or adjusting the position of the attachment. For example, the contact stage of adjustable height (reference sign 5 in Fig. 5) is detachably provided in Embodiment 1, while any one of a plurality of contact stages having different heights (reference signs 252A and 252B in Fig. 8) is detachably provided in Embodiment 2. The protruding height from the connector (2) to the fixing face (F) can be adjusted by attaching any one of contact stages (5/252) at the tip or replacing the contact stage with another contact stage having a different height (5/252). The plurality of contact stages (5/252) may be stacked to adjust the protruding height.

Each torque wrench body includes a data storage means that stores traceable detection signal and a test result including detection contents, and a transmission means that appropriately transmits the test result to an external reception means. For example, a communication set including: the plurality of testing devices for fixing-load verification having an object identification function, a positional information transmission means, and a wireless data transfer means; and a receiver having a data reception means constitutes a detection system capable of confirming the test state in real time by remote communication. A display means that displays a fixing force map indicating fixing forces of a plurality of fixing bolts located at various sites according to data received by the receiver may be further provided. Therefore, the fixing state of any fixing bolt among the plurality of fixing bolts located at various sites can be confirmed.

### DESCRIPTION OF REFERENCE SIGNS

B: Fixing bolt
BP: Fixed plate
F: Fixing face
N: Nut
1: Torque wrench body
11: Handle
12, 12A, 12B: Display portion
13: Operating part
2: Connector
20T: Notched face
2P: Support point
21, 25: Contact portion
22: Connection tube
220: Inclination angle
22P: Connection pin
23: Box-like frame
23L: Center distance
24: Connection bolt
910: Arm
3: Engagement means
3P: Force application point
30: Recessed part
30E: Recess inner face
4: Coupler
42: Cylindrical portion
41: Collar
5, 252: Contact stage

## Claims

1. A testing device for fixing-load verification for verifying a fixing load of a fixing bolt (B) having a front end embedded in a fixing face (F), and a head protruding from the fixing face (F), the testing device comprising:
a signal-type torque wrench body (1) having a handle (11) at an upper end, and a detection mechanism for anti-torque in a bending direction in a rod-like torque detection unit at a lower end;
a connector (2) that covers the rod-like torque detection unit at the lower end of the torque wrench body (1), the connector being coupled to a front end of a side face of the torque wrench body (1);
a contact portion (21/25) axially supported to be rotatable about a pivot axis in the connector (2) within a predetermined angle, the contact portion protruding outward from a lower part of the connector (2), and making contact with the fixing face (F) at its front end; **characterized in that** the testing device comprises:
an engagement means (3) that fixedly protrudes from one side of the connector (2), the engagement means engaging with the fixing bolt (B) protruding from the fixing face (F), wherein:
the fixing bolt (B) engages with the engagement means (3), and the contact portion (21/25) of the connector (2) makes contact with the fixing face (F) in an opposed manner into a set state;
the torque wrench body (1) is inclined toward the other side while the contact state of the contact portion (21/25) with the fixing face (F) is kept in the set state, to rotate the contact portion (21/25) in contact with the fixing face (F) about the pivot axis in the connector (2), such that the rod-like torque detection unit covered with the connector (2) detects an anti-torque caused by a fixing force of the fixing bolt (B);
when detecting a predetermined torque set value, the detection mechanism built in the torque wrench body (1) outputs a detection sound or detection display using an output device in the torque wrench body (1);
the engagement means (3) includes a recessed part (30) that accommodates the fixing bolt (B) from side in a front end of a side face; and
in the set state, a protruding portion of the fixing bolt (B) is fixedly accommodated in the recessed part (30) to lock the fixing bolt (B) in the recessed part (30), and wherein:
the engagement means (3) is configured of an engagement plate fixedly extending from one side of the connector (2) in a predetermined extending direction;
the recessed part (30) as a predetermined notched channel is formed by cutting the engagement plate from one end toward the inside of the plate in plan view;
the notched channel at least partially includes a channel direction that is different from the extending direction in plan view; and
a thread of the fixing bolt (B) can engage with an inner side face of a recess inner face (30E) formed at a deepest part of the recessed part (30).

2. The testing device for fixing-load verification according to claim 1, wherein
at least a portion of the recess inner face (30E) formed at the deepest part of the recessed part (30) has an inner side face opposed to the extending direction of the engagement plate, and at least the deepest part of the notched channel of the recessed part (30) and the extending direction of the engagement plate cross each other with an inclination angle less than 90 degrees, or overlap each other in plan view.

3. The testing device for fixing-load verification according to claim 1 or 2, wherein
the recess inner face (30E) at the deepest part of the recessed part (30) has multi-stage engagement grooves (3SE) formed along a thread of the fixing bolt (B).

4. The testing device for fixing-load verification according to claim 1, wherein:
the engagement means (3) is configured of two engagement claws (31) protruding from the side of the connector (2) in parallel, and a coupler (4) having a cylindrical portion (42) that can be screwed with the fixing bolt (B);
the two engagement claws (31) forms the recessed part (30) that is a U-shaped groove in a protruding base between the engagement claws (31);
the coupler (4) has a collar (41) on an outer circumference of the cylindrical portion (42), and
the coupler (4) fixedly screwed with the fixing bolt (B) is accommodated at the deepest part of the recessed part (30) between the two engagement claws (3), and the collar (41) of the coupler (4) makes contact with upper faces or lower faces of the engagement claws (31) to engage the engagement claws (31) with the coupler (4).

5. The testing device for fixing-load verification according to claim 1, 2, or 3, wherein
the contact portion (21/25) is provided with a detachable contact stage (5/252) that adjusts a distance from a mount face at a protruding tip, and the contact stage (5/252) is attached to adjust a protruding height from the connector (2) to the fixing face (F).

## Patentansprüche

1. Prüfvorrichtung zur Überprüfung einer Befestigungslast für ein Überprüfen einer Befestigungslast eines Befestigungsbolzens (B), bei dem ein vorderes Ende in eine Befestigungsfläche (F) eingebettet ist und ein Kopf aus der Befestigungsfläche (F) vorsteht, wobei die Prüfvorrichtung aufweist:
einen Drehmomentschlüsselkörper (1) vom Signaltyp, der einen Griff (11) an einem oberen Ende und einen Detektionsmechanismus für ein Gegen-Drehmoment in Biegerichtung in einer stangenartigen Drehmomentdetektionseinheit an einem unteren Ende aufweist;
ein Verbindungsstück (2), welches die stangenartige Drehmomentdetektionseinheit am unteren Ende des Drehmomentschlüsselkörpers (1) bedeckt, wobei das Verbindungsstück mit einem vorderen Ende einer Seitenfläche des Drehmomentschlüsselkörpers (1) verbunden ist;
einen Kontaktabschnitt (21/25), der axial so gelagert ist, dass er in dem Verbindungsstück (2) innerhalb eines vorbestimmten Winkels um eine Schwenkachse drehen kann, wobei der Kontaktabschnitt von einem unteren Teil des Verbindungsstücks (2) nach außen vorsteht und zur Befestigungsfläche (F) an seinem vorderen Ende einen Kontakt herstellt; **dadurch gekennzeichnet, dass** die Prüfvorrichtung aufweist:
eine Eingreifeinrichtung (3), die von der einen Seite des Verbindungsstücks (2) fest verbunden vorsteht, wobei die Eingreifeinrichtung mit dem aus der Befestigungsfläche (F) hervorstehenden Befestigungsbolzen (B) in Eingriff ist, wobei:
der Befestigungsbolzen (B) mit der Eingreifeinrichtung (3) in Eingriff kommt, und der Kontaktabschnitt (21/25) des Verbindungsstücks (2) einen Kontakt zur Befestigungsfläche (F) in gegenüberliegender Weise herstellt, und zwar zu einem eingerichteten Zustand;
wobei der Drehmomentschlüsselkörper (1) hin zur anderen Seite geneigt wird, und dabei der Kontaktzustand des Kontaktabschnitts (21/25) zur Befestigungsfläche (F) in dem eingerichteten Zustand gehalten wird, um den Kontaktabschnitt (21/25), der sich in Kontakt mit der Befestigungsfläche (F) befindet, um die Schwenkachse in dem Verbindungsstück (2) zu drehen, derart, dass die stangenartige Drehmomentdetektionseinheit, die mit dem Verbindungsstück (2) versehen ist, ein Gegen-Drehmoment erfasst, das durch eine Befestigungskraft des Befestigungsbolzens (B) verursacht wird;
bei Erfassen eines vorbestimmten Drehmomenteinstellwertes der in den Drehmomentschlüsselkörper (1) eingebaute Detektionsmechanismus einen Detektionston oder eine Detektionsanzeige ausgibt, und zwar unter Verwendung einer Ausgabevorrichtung in dem Drehmomentschlüsselkörper (1);
die Eingreifeinrichtung (3) einen ausgesparten Teil (30) beinhaltet, der den Befestigungsbolzen (B) von der Seite in einem vorderen Ende einer Seitenfläche aufnimmt; und
im eingerichteten Zustand ein hervorstehender Abschnitt des Befestigungsbolzens (B) in den ausgesparten Teil (30) fest verbunden aufgenommen ist, um den Befestigungsbolzen (B) in dem ausgesparten Teil (30) zu verriegeln, und wobei:
die Eingreifeinrichtung (3) aus einer Eingreifplatte konfiguriert ist, die sich von dem einen Ende des Verbindungsstücks (2) in einer vorbestimmten Verlaufsrichtung fest verbunden erstreckt;
der ausgesparte Teil (30) als ein vorbestimmter eingeschnittener Kanal dadurch ausgebildet wird, dass die Eingreifplatte von dem einen Ende her hin zur Innenseite der Platte in der Draufsicht geschnitten wird;
der eingeschnittene Kanal zumindest teilweise eine Kanalrichtung beinhaltet, die sich von der Verlaufsrichtung in der Draufsicht unterscheidet; und
ein Gewinde des Befestigungsbolzens (B) mit einer Innenseitenfläche einer Innenfläche (30E) einer Aussparung in Eingriff kommen kann, die an einem tiefsten Teil des ausgesparten Teils (30) ausgebildet ist.

2. Prüfvorrichtung zur Überprüfung einer Befestigungslast nach Anspruch 1, wobei
zumindest ein Abschnitt der Innenfläche (30E) der Aussparung, die an dem tiefsten Teil des ausgesparten Teils (30) ausgebildet ist, eine Innenseitenfläche aufweist, die der Verlaufsrichtung der Eingreifplatte entgegengesetzt ist, und zumindest der tiefste Teil des eingeschnittenen Kanals des ausgesparten Teils (30) und die Verlaufsrichtung der Eingreifplatte einander mit einem Neigungswinkel von weniger als 90° kreuzen, oder einander in der Draufsicht überlappen.

3. Prüfvorrichtung für eine Überprüfung einer Befestigungslast nach Anspruch 1 oder 2, wobei
die Innenfläche (30E) der Aussparung an dem tiefsten Teil des ausgesparten Teils (30) mehrstufige Eingreifnuten (3SE) aufweist, die entlang einem Gewinde des Befestigungsbolzens (B) ausgebildet sind.

4. Prüfvorrichtung zur Überprüfung einer Befestigungslast nach Anspruch 1, wobei:
die Eingreifeinrichtung (3) aus zwei Eingreifklauen (31) konfiguriert ist, die von der Seite des Verbindungsstücks (2) parallel vorstehen, und ein Kopplungsstück (4), das einen zylindrischen Abschnitt (42) aufweist, mit dem Befestigungsbolzen (B) verschraubt werden kann;
die zwei Eingreifklauen (31) den ausgesparten Teil (30) bilden, bei dem es sich um eine U-förmige Nut in einer vorstehenden Basis zwischen den Eingreifklauen (31) handelt;
das Kopplungsstück (4) einen Bund (41) an einem Außenumfang des zylindrischen Abschnitts (42) aufweist, und
das Kopplungsstück (4), das mit dem Befestigungsbolzen (B) fest verschraubt ist, an dem tiefsten Teil des ausgesparten Teils (30) zwischen den zwei Eingreifklauen (3) untergebracht ist, und der Bund (41) des Kopplungsstücks (4) einen Kontakt mit den oberen Flächen oder den unteren Flächen der Eingreifklauen (31) herstellt, um die Eingreifklauen (31) mit dem Kopplungsstück (4) in Eingriff zu bringen.

5. Prüfvorrichtung zur Überprüfung einer Befestigungslast nach Anspruch 1, 2 oder 3, wobei
der Kontaktabschnitt (21/25) mit einer demontierbaren Kontaktstufe (5/252) versehen ist, mit der ein Abstand zu einer Montierfläche bei einem hervorstehenden äußeren Ende angepasst wird, und die Kontaktstufe (5/252) angebracht ist, um eine Überstandshöhe von dem Verbindungsstück (2) zur Befestigungsfläche (F) anzupassen.

## Revendications

1. Dispositif d'essai pour la vérification de charge de fixation, pour vérifier une charge de fixation d'un boulon de fixation (B) présentant une extrémité avant encastrée dans une face de fixation (F), et une tête qui dépasse de la face de fixation (F), le dispositif d'essai comprenant :
un corps de clé dynamométrique du type à signal (1) comportant une poignée (11), à une extrémité supérieure, et un mécanisme de détection pour anti-couple dans une direction de flexion dans une unité de détection de couple en forme de barre, à une extrémité inférieure ;
un raccord (2) qui couvre l'unité de détection en forme de barre, à l'extrémité inférieure du corps de clé dynamométrique (1), le raccord étant relié à une extrémité avant d'une face latérale dudit corps de clé dynamométrique (1) ;
une partie de contact (21/25) supportée axialement pour pouvoir tourner sur un axe de pivot dans le raccord (2) à l'intérieur d'un angle prédéterminé, la partie de contact dépassant, vers l'extérieur, d'une partie inférieure du raccord (2), et réalisant un contact avec la face de fixation (F), à son extrémité avant ; **caractérisé en ce que** le dispositif d'essai comprend :
des moyens d'accouplement (3) qui dépassent de manière fixe d'un côté du raccord (2), les moyens d'accouplement s'accouplant avec le boulon de fixation (B) qui dépasse de la face de fixation (F),
le boulon de fixation (B) s'accouplant avec les moyens de fixation (3), et la partie de contact (21/25) du raccord (2) réalisant un contact avec la face de fixation (F) d'une manière opposée, jusque dans un état calé ;
le corps de clé dynamométrique (1) étant incliné vers l'autre côté alors que l'état de contact de la partie de contact (21/25) avec la face de fixation (F) est maintenu dans l'état bloqué, pour faire tourner ladite partie de contact (21/25) en contact avec la face de fixation (F) sur l'axe de pivot dans le raccord (2), de telle sorte que l'unité de détection de couple en forme de barre couverte par le raccord (2) détecte un anti-couple causé par une force de fixation du boulon de fixation (B) ;
lors de la détection d'une valeur de réglage de couple prédéterminée, le mécanisme de détection intégré au corps de clé dynamométrique (1) émettant un son de détection ou un affichage de détection à l'aide d'un dispositif de sortie prévu dans ledit corps de clé dynamométrique (1) ;
les moyens d'accouplement (3) comprenant une partie en creux (30) qui loge le boulon de fixation (B) par le côté dans une extrémité avant d'une face latérale ; et
dans l'état calé, une partie saillante du boulon de fixation (B) étant logée de manière fixe dans la partie en creux (30) afin de verrouiller le boulon de fixation (B) dans ladite partie en creux (30), et
les moyens d'accouplement (3) se composant d'une plaque d'accouplement qui s'étend de manière fixe à partir d'un côté du raccord (2), dans une direction d'extension prédéterminée ;
la partie en creux (30), qui se présente comme un passage entaillé prédéterminé, étant formée par découpage de la plaque d'accouplement à partir d'une extrémité vers l'intérieur de la plaque, vue en plan ;
le passage entaillé contenant au moins en partie une direction de passage qui est différente de la direction d'extension, vue en plan ; et
un filetage du boulon de fixation (B) pouvant s'accoupler avec une face latérale intérieure d'une face intérieure de creux (30E) formée sur la partie la plus profonde de la partie en creux (30).

2. Dispositif d'essai pour la vérification de charge de fixation selon la revendication 1, dans lequel une partie au moins de la face intérieure de creux (30E) formée sur la partie la plus profonde de la partie en creux (30) a une face latérale intérieure opposée au sens d'extension de la plaque d'accouplement, et au moins la partie la plus profonde du passage entaillé de ladite partie en creux (30) et le sens d'extension de la plaque d'accouplement se croisent avec un angle d'inclinaison de moins de 90 degrés, ou se recouvrent, vus en plan.

3. Dispositif d'essai pour la vérification de charge de fixation selon la revendication 1 ou 2, dans lequel la face intérieure de creux (30E) sur la partie la plus profonde de la partie en creux (30) présente des rainures d'accouplement à plusieurs niveaux (3SE) formées le long d'un filetage du boulon de fixation (B).

4. Dispositif d'essai pour la vérification de charge de fixation selon la revendication 1, dans lequel :
les moyens d'accouplement (3) se composent de deux griffes d'accouplement (31) qui dépassent du côté du raccord (2), parallèlement, et d'un élément de liaison (4) comportant une partie cylindrique (42) qui peut être vissée avec le boulon de fixation (B) ;
les deux griffes d'accouplement (31) forment la partie en creux (30) qui est constituée par une rainure en U dans une base saillante entre les griffes d'accouplement (31) ;
l'élément de liaison (4) a un collet (41) sur une circonférence extérieure de la partie cylindrique (42), et
l'élément de liaison (4) vissé de manière fixe avec le boulon de fixation (B) est logé au niveau de la partie la plus profonde de la partie en creux (30) entre les deux griffes d'accouplement (3), et le collet (41) de l'élément de liaison (4) réalise un contact avec les faces supérieures ou les faces inférieures des griffes d'accouplement (31) afin d'accoupler lesdites griffes d'accouplement (31) à l'élément de liaison (4).

5. Dispositif d'essai pour la vérification de charge de fixation selon la revendication 1, 2 ou 3, dans lequel la partie de contact (21/25) est pourvue d'une platine de contact amovible (5/252) qui ajuste une distance à partir d'une face de montage au niveau d'une pointe saillante, et ladite platine de contact (5/252) est fixée pour l'ajustement de la hauteur entre le raccord (2) et la face de fixation (F).
